# EUROPEAN PATENT APPLICATION

(11) **EP 4 832 544 A1**
(43) Date of publication of application: **28.10.2026**
(21) Application number: 24920253.2
(22) Date of filing: 17.09.2024
(51) Int. Cl.: H04W 16/28, H04B 7/06, H04W 16/02, H04W 16/14, H04W 72/0446, H04W 84/06

(54) **MOBILE COMMUNICATION SYSTEM**

(30) Priority: 23.01.2024 JP 2024008134
(71) Applicant: Softbank Corp., Tokyo 105-7529 (JP)
(72) Inventor: FUJII Teruya, Tokyo 105-7529 (JP); FUJII Takafumi, Tokyo 105-7529 (JP)
(74) Representative: SSM Sandmair
(86) International application number: PCT/JP2024/033137
(87) International publication number: WO 2025/158705

(57) **Abstract**

In a mobile communication system comprising a upper-airspace-relaying type base station having an antenna mounted on an upper-airspace flying body, etc. (including a UAV, a HAPS, and a communication satellite) and a terrestrial base station, an interference in an uplink and downlink of a service link of each of the base stations is reduced, while improving a frequency utilization efficiency and preventing a decrease in communication capacity of a terminal. Each of the upper-airspace-relaying type base station and the terrestrial base station performs a radio communication of a service link with a terminal by a TDD (Time Division Duplex) method using the same frequency. The transmission timing and the reception timing of the radio communication of the TDD method in the service link are reversed to each other between the upper-airspace-relaying type base station and the terrestrial base station. The upper-airspace-relaying type base station estimates a direction to the service link antenna of the terrestrial base station, and controls to direct a null of a directional beam of the service link antenna of the upper-airspace-relaying type base station in the estimated direction to the service link antenna of the terrestrial base station.

## Description

### TECHNICAL FIELD

The present invention relates to a mobile communication system including a base station capable of performing a radio communication with a terminal.

### BACKGROUND ART

There is conventionally known a UAV that flies at altitudes of 18 km or less and a HAPS that flies in the stratosphere at altitudes of 18 km or more as a flying body or a floating body located in an upper airspace. There is also known a mobile communication system that is provided with a upper-airspace-relaying type base station as a first base station that performs radio communication with a terminal via a service link antenna of a relay communication station disposed in a flying body or a floating body such as a UAV or HAPS (flying body), etc. located in an upper airspace, and a terrestrial base station as a second base station that performs a radio communication with the terminal via an antenna disposed on land or at sea, and that shares the same frequency in a service link between the upper-airspace-relaying type base station and the terrestrial base station, enabling a radio communication between terminals of common specifications.

As a technology that can be applied to reduce an interference between the upper-airspace-relaying type base station and the terrestrial base station in the mobile communication system, there is an interference control technology that adjusts and controls radio frames in the time domain (subframe units) on the premise that the upper-airspace-relaying type base station and the terrestrial base station are time-synchronized with each other (see, for example, Patent Literature 1 and Non-Patent Literature 1). This interference control technology is a technology that complies with the LTE (Long Term Evolution)-Advanced standard, and is also called eICIC (enhanced Inter-Cell Interference Coordination).

### CITATION LIST

### PATENT LITERATURE

Patent Literature 1: Japanese Unexamined Patent Application Publication No. 2012-129793.

### NON-PATENT LITERATURE

Non-Patent Literature 1: "Overview of 3GPP", Release 10, V0.2.1 (2014-06).

### SUMMARY OF INVENTION

### TECHNICAL PROBLEM

When the above-mentioned conventional interference control technology is applied, the upper-airspace-relaying type base station and the terrestrial base station use the frequencies allocated to the service link in a time-division manner, so the radio signals used by the upper-airspace-relaying type base station and the terrestrial base station are orthogonal on the time axis and no mutual interference occurs. However, both the upper-airspace-relaying type base station and the terrestrial base station cannot use all of the frequencies allocated to the service links due to the time-division use of frequencies, the communication capacity (maximum transmission rate, peak throughput) of the terminals on each service link decreases.

### SOLUTION TO PROBLEM

A mobile communication system according to an aspect disclosed in the present description is a mobile communication system comprising a upper-airspace-relaying type base station that performs a radio communication with a terminal via a service link antenna of a relay communication station provided in a flying body or floating body located in an upper airspace and a terrestrial base station disposed on land or at sea, and the upper-airspace-relaying type base station and the terrestrial base station are time-synchronized with each other. Each of the upper-airspace-relaying type base station and the terrestrial base station performs a radio communication of a service link with a terminal by a TDD (Time Division Duplex) method using a same frequency. Transmission timing and reception timing of the radio communication of the TDD method in the service link are reversed to each other between the upper-airspace-relaying type base station and the terrestrial base station. The upper-airspace-relaying type base station estimates a direction to the service link antenna of the terrestrial base station, and controls to direct a null of directional beam of the service link antenna of the upper-airspace-relaying type base station in the estimated direction to the service link antenna of the terrestrial station.

In the foregoing mobile communication system, the upper-airspace-relaying type base station and the terrestrial base station may adjust their transmission timings so that the transmissions are reversed to each other by using time information obtained by a GNSS (Global Navigation Satellite System) receiver.

In the foregoing mobile communication system, the relay communication station mounted on the flying body or the floating body may be configured with a repeater relay apparatus (frequency-conversion repeater relay apparatus) that relays transmission and reception signals without regenerating them.

In the foregoing mobile communication system, the relay communication station mounted on the flying body or the floating body may be configured with a base station apparatus that regenerates transmission and reception signals, remodulates the regenerated signals, and relays the remodulated signals.

In the foregoing mobile communication system, the upper-airspace-relaying type base station may receive location information obtained by a GNSS (Global Navigation Satellite System) receiver mounted on the terrestrial base station or the service link antenna of the terrestrial base station via a gateway apparatus, and may estimate the direction to the service link antenna of the terrestrial base station relative to the location information of the relay communication station.

In the foregoing mobile communication system, the upper-airspace-relaying type base station may include an array antenna as the service link antenna, measure a reception power of radio waves from the service link antenna of the terrestrial base station using the array antenna, and estimate the direction to the service link antenna of the terrestrial base station from a measurement result of the reception power.

In the foregoing mobile communication system, the mobile communication system may further comprise an inter-base station cooperative control apparatus that performs a control between the upper-airspace-relaying type base station and the terrestrial base station, and the inter-base station cooperative control apparatus may adjust their transmission timings so that the transmission and the reception are reversed to each other between respective base stations, by using time information of GNSS (Global Navigation Satellite System) that is received by the upper-airspace-relaying type base station and received via a gateway apparatus and, time information of GNSS (Global Navigation Satellite System) received by the terrestrial base station.

In the foregoing mobile communication system, the mobile communication system may further comprise an inter-base station control apparatus that performs a control between the upper-airspace-relaying type base station and the terrestrial base station, and location information obtained by the GNSS (Global Navigation Satellite System) receiver mounted on the terrestrial base station or the service link antenna of the terrestrial base station may be transferred to the upper-airspace-relaying type base station via a gateway apparatus and the inter-base station control apparatus, and the upper-airspace-relaying type base station may estimate the direction to the service link antenna of the terrestrial base station relative to the location information of the relay communication station.

In the foregoing mobile communication system, the terrestrial base station may estimate a direction to the service link antenna of the upper-airspace-relaying type base station, and may control to direct a null of directional beam of the service link antenna of the terrestrial base station in the estimated direction to the service link antenna of the relay communication station.

In the foregoing mobile communication system, the terrestrial base station may include an array antenna as the service link antenna, measure radio-wave arrival direction from the service link antenna of the relay communication station using the array antenna, and may estimate the direction to the service link antenna of the relay communication station from the measurement results.

In the foregoing mobile communication system, the mobile communication system may further comprise an inter-base station cooperative control apparatus that performs a control between the upper-airspace-relaying type base station and the terrestrial base station, and the inter-base station cooperative control apparatus may adjust the transmission timing so that the transmission and the reception are reversed to each other between respective base stations, by using time information of GNSS (Global Navigation Satellite System) that is received by the upper-airspace-relaying type base station and received via a gateway apparatus and, time information of GNSS (Global Navigation Satellite System) received by the terrestrial base station.

In the foregoing mobile communication system, the mobile communication system may further comprise an inter-base station cooperative control apparatus that performs a control between the upper-airspace-relaying type base station and the terrestrial base station, location information obtained by a GNSS (Global Navigation Satellite System) receiver mounted on the flying object or the floating object may be transferred to the terrestrial base station via a gateway apparatus and the inter-base station cooperative control apparatus, and the terrestrial base station may estimate the direction to the service link antenna of the relay communication station relative to the location information of its own terrestrial base station.

In the foregoing mobile communication system, the flying body or the floating body may be a communication satellite, a UAV (Unmanned Aerial Vehicle) that flies at an altitude of 18 km or less, or a HAPS that flies in the stratosphere at an altitude of 18 km or more.

According to the mobile communication system disclosed in the present description, it is possible to reduce the interference caused by the transmission signal of downlink from a service link antenna of the relay communication station (an antenna of the upper-airspace-relaying type base station ) provided in the flying body or the floating body located in the upper airspace, to the uplink reception signal of a service link antenna of the terrestrial base station (terrestrial-base station antenna), and it is possible to reduce the interference caused by the transmission signal of downlink from the terrestrial-base station antenna, to the uplink reception signal of the antenna of the upper-airspace-relaying type base station.

### BRIEF DESCRIPTION OF DRAWINGS

[FIG. 1] FIG. 1 is a diagram showing an example of an overall configuration of a mobile communication system according to an embodiment.
[FIG. 2A] FIG. 2A is a diagram showing a configuration example of a relay communication station configuring an example of a HAPS base station that constitutes the mobile communication system of the embodiment.
[FIG. 2B] FIG. 2B is a diagram showing a configuration example of a HAPS-GW, which corresponds to FIG. 2A.
[FIG. 3A] FIG. 3A is a diagram showing a configuration example of a relay communication station configuring another example of the HAPS base station that constitutes the mobile communication system of the embodiment.
[FIG. 3B] FIG. 3B is a diagram showing a configuration example of a HAPS-GW, which corresponds to FIG. 3A.
[FIG. 4A] FIG. 4A is a diagram showing an example of interference from a HAPS downlink to a terrestrial-base station terminal when the HAPS base station is applied to a system configuration of a reference example.
[FIG. 4B] FIG. 4B is a diagram showing an example of interference from a terrestrial-base station terminal to an uplink when the HAPS base station is applied to the current configuration.
[FIG. 5] FIG. 5 is a diagram showing an arrangement example of time slots of radio resources that are respectively set in a HAPS base station and a terrestrial base station to which the enhanced Inter-Cell Interference Coordination (eICIC) is applied, in the case that the HAPS base station is applied to the system configuration of the reference example.
[FIG. 6A] FIG. 6A is a diagram showing an uplink and downlink between the terrestrial base station and the terrestrial-base station terminal when a TDD (Time Division Duplex) method is used as a transmission method for a service link in the mobile communication system according to the embodiment.
[FIG. 6B] FIG. 6B is a diagram showing an example of a frequency band, in which the same frequency is shared in uplink and downlink between the terrestrial base station and the terrestrial-base station terminal in the TDD method.
[FIG. 6C] FIG. 6C is a diagram showing an arrangement example of time slots for uplink and downlink between the terrestrial base station and the terrestrial-base station terminal in the TDD method.
[FIG. 7] FIG. 7 is a diagram showing an arrangement example of time slots for uplink and downlink when a synchronization control is performed to synchronize a transmission timing and a reception timing among a plurality of terrestrial base stations in the system configuration using the conventional TDD method.
[FIG. 8A] FIG. 8A is a diagram showing an example of interference in the downlink when a transmission timing and a reception timing are synchronized among plural terrestrial base stations by the synchronization control in the system configuration using the conventional TDD method.
[FIG. 8B] FIG. 8B is a diagram showing an example of interference in the uplink when the transmission timing and the reception timing are synchronized among plural terrestrial base stations by a synchronization control in the system configuration using the conventional TDD method.
[FIG. 9] FIG. 9 is a diagram showing an arrangement example of time slots for uplink and downlink links when a synchronization control is performed to reverse a transmission timing and a reception timing between the terrestrial base station and the HAPS base station using the TDD method in the mobile communication system according to the embodiment.
[FIG. 10A] FIG. 10A is a diagram showing an example of interference from the terrestrial base station to the uplink of the HAPS base station when a synchronization control is performed to reverse a transmission timing and a reception timing between the terrestrial base station and the HAPS base station.
[FIG. 10B] FIG. 10B is a diagram showing an example of interference from the HAPS base station to the uplink of the terrestrial base station when a synchronization control is performed to reverse a transmission timing and a reception timing between the terrestrial base station and the HAPS base station.
[FIG. 10C] FIG. 10C is a diagram showing the interferences of FIGS. 10A and 10B summarizing together.
[FIG. 11A] FIG. 11A is a diagram showing a reduction in interference from the HAPS base station to the uplink of the terrestrial base station when null-forming is applied to beam forming in the antenna of the HAPS base station according to the embodiment.
[FIG. 11B] FIG. 11B is a diagram showing a reduction in interference from the terrestrial base station to the uplink of the HAPS base station when null-forming is applied to beam forming in the antenna of the HAPS base station according to the embodiment.
[FIG. 11C] FIG. 11C is a diagram showing a reduction in interference in FIGS. 11A and 11B summarizing together.
[FIG. 12A] FIG. 12A is a diagram showing an example of a service link antenna and a relay-communication station apparatus of the HAPS base station according to the embodiment.
[FIG. 12B] FIG. 12B is a diagram showing an example of beamforming in the HAPS base station.
[FIG. 13] FIG. 13 is a diagram showing an example of beamforming control of the HAPS base station using a GPS receiver mounted on the HAPS via an inter-base station cooperative control apparatus in the mobile communication system according to the embodiment.
[FIG. 14] FIG. 14 is a diagram showing an example of a main part configuration of the antenna and the relay-communication station apparatus when the beamforming control is performed using the GPS receiver mounted on the HAPS, in the HAPS base station according to the embodiment.
[FIG. 15] FIG. 15 is a diagram showing an example of a main part configuration of the antenna and the relay-communication station apparatus of the HAPS base station in the case that the beamforming control is performed by a radio-wave arrival direction estimation for the terrestrial base station, in the HAPS base station according to the embodiment.
[FIG. 16] FIG. 16 is a diagram showing another example of a main part configuration of the antenna and the relay-communication station apparatus of the HAPS base station in the case that the beamforming control is performed by a radio-wave arrival direction estimation for the terrestrial base station, in the HAPS base station according to the embodiment.
[FIG. 17] FIG. 17 is a diagram showing an example of control of the transmission timing and the reception timing between the terrestrial base station and the HAPS base station according to the embodiment.
[FIG. 18] FIG. 18 is a diagram showing an example of control of the transmission timing and the reception timing between the terrestrial base station and the HAPS base station according to the embodiment.
[FIG. 19A] FIG. 19A is a diagram showing a reduction of interference from the terrestrial base station to the uplink of the terrestrial base station when the null-forming is applied to the beamforming in each of the antennas of the HAPS base station and the terrestrial base station according to the embodiment.
[FIG. 19B] FIG. 19B is a diagram showing a reduction of interference from the terrestrial base station to the uplink of the HAPS base station when the null-forming is applied to the beamforming in each of the antennas of the HAPS base station and the terrestrial base station according to the embodiment.
[FIG. 19C] FIG. 19C is a diagram showing the reduction of interference in FIGS. 19A and 19B summarizing together.
[FIG. 20A] FIG. 20A is a diagram showing an example of an antenna and a base station apparatus of the terrestrial base station according to the embodiment.
[FIG. 20B] FIG. 20B is a diagram showing an example of beamforming in the terrestrial base station.
[FIG. 21] FIG. 21 is a diagram showing an example of beamforming control of the terrestrial base station using the GPS receiver mounted on the HAPS via the inter-base station cooperative control apparatus in the mobile communication system according to the embodiment.
[FIG. 22] FIG. 22 is a diagram showing an example of a main part configuration of the antenna and the base station apparatus when the beamforming control is performed using the GPS receiver mounted on the HAPS, in the terrestrial base station according to the embodiment.
[FIG. 23] FIG. 23 is a diagram showing an example of a main part configuration of the antenna and the base station apparatus of the terrestrial base station when the beamforming control is performed by a radio-wave arrival direction estimation for the HAPS, in the terrestrial base station according to the embodiment.
[FIG. 24] FIG. 24 is a diagram showing another example of a main part configuration of the antenna and the base station apparatus of the terrestrial base station when the beamforming control is performed by a radio-wave arrival direction estimation for the HAPS, in the terrestrial base station according to the embodiment.

### DESCRIPTION OF EMBODIMENTS

Hereinafter, various embodiments are described with reference to the drawings. It is noted that, each drawing merely shows the shape, size and locational relationship in a schematic manner to enable the contents of the present invention to be understood, and therefore the present invention is not limited to only the shape, size and locational relationship exemplified in each drawing. Furthermore, the numerical values exemplified below are merely preferred examples of the present invention, and therefore the present invention is not limited to the exemplified numerical values.

In the present embodiment, although an example of a mobile communication system in which the same frequency is shared between a HAPS base station (HAPS cellular system) as a upper-airspace-relaying type base station and a terrestrial base station (terrestrial cellular system) is mainly described, the present invention can also be applied to a mobile communication system in which the relay communication station of the upper-airspace-relaying type base station is disposed in a flying body or floating body other than the HAPS. Herein, the upper-airspace-relaying type base station may be an upper-airspace communication base station used in an NTN (Non-Terrestrial Network). The NTN may be, for example, a network using an artificial satellite such as a communication satellite described below, and a HAPS or drone as a stratospheric communications platform that can provide communication services over a wide area by carrying a communication device and the like on an unmanned aircraft flown in the stratosphere.

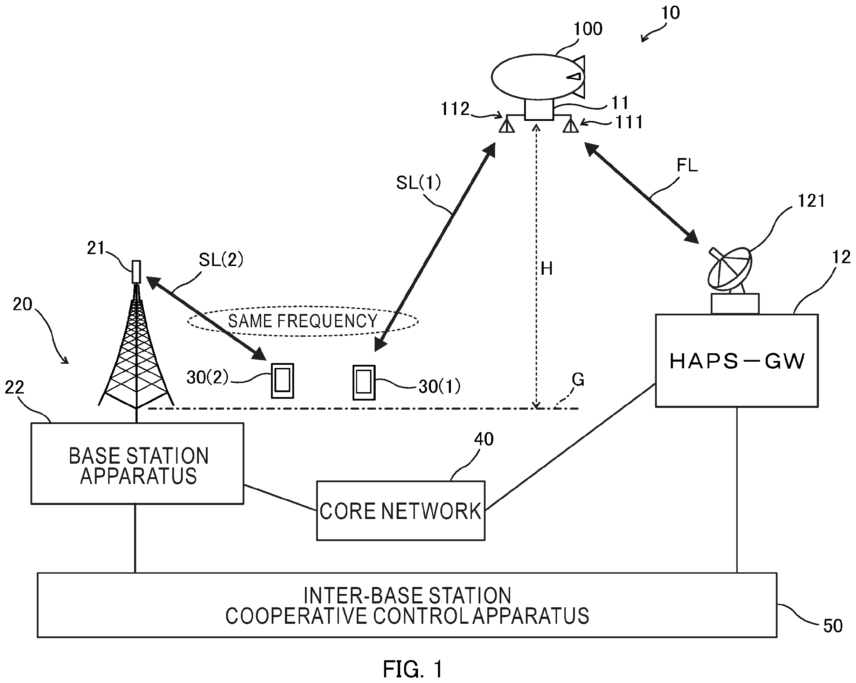

FIG. 1 is a diagram showing an example of a configuration of a mobile communication system (mobile phone system) according to an embodiment of the present invention. In FIG. 1, the mobile communication system of the present embodiment is provided with a HAPS base station (HAPS cellular system) 10 as a first base station (upper-airspace-relaying type base station) and a terrestrial base station (terrestrial cellular system) 20 as a second base station, as a plurality of base stations capable of performing radio communications with terminals 30.

The HAPS base station 10 performs radio communication with a terminal (hereinafter also referred to as a "HAPS-base station terminal") 30(1) via a service link antenna (also referred to as a "HAPS-base station antenna") 112 of a relay communication station 11 provided on a HAPS ("High Altitude Pseudo Satellite" or "High Altitude Platform Station") 100, which serves as a flying body or a floating body located in the upper airspace. The HAPS 100 is provided with, for example, at least one of a battery and a solar-power generation system, and is capable of flying by the electric power. The HAPS 100 may be the airship-type HAPS as shown in the figure, or a solar plane-type HAPS. Further, the flying body or the floating body, in which the relay communication station 11 is provided, may be, not only the HAPS, but also an artificial satellite (for example, a communication satellite), a balloon, a drone, or an aircraft. The artificial satellite may be, for example, a LEO (Low Earth Orbit) satellite located in an orbit at an altitude of up to 2,000 [km] above the Earth's surface, a MEO (Medium Earth Orbit) satellite located in orbits at altitudes of higher than 2,000 [km] and lower than 36,000 [km], or a HEO (High Earth Orbit) satellite located in orbits at altitudes of near or higher than 36,000 [km]. Furthermore, the artificial satellite may be a GEO (Geostationary Earth Orbit) satellite, a quasi-geostationary satellite, a quasi-zenith satellite, or a non-geostationary satellite. Moreover, the flying body or the floating body, in which the relay communication station 11 is provided, may be unmanned or manned. For example, the flying body or the floating body may be an unmanned or manned HAPS, an unmanned or manned satellite, an unmanned or manned balloon, an unmanned or manned drone, an unmanned aircraft, or a manned aircraft. Further, the flying body or the floating body may be an unmanned aerial vehicle (UAV) such as an unmanned drone, a UAS (Unmanned Aircraft Systems), etc. Furthermore, the flying body or the floating body may be a moored type body that is moored to another apparatus (mooring apparatus) using a mooring line such as a rope, cable, string, or wire which has a predetermined strength. The purpose of mooring with the mooring line may include a purpose of power supply and signal transmission. Another apparatus, to which the moored type flying body or floating body is moored, may be an apparatus fixedly placed on the ground, an apparatus mounted on a vehicle capable of moving on the ground, an apparatus mounted on a ship, float, etc. capable moving on water such as sea or lake, or an apparatus mounted on another flying body or floating body. The mooring line may include a power supply line, a communication line such as an optical fiber, etc., or both the power feed line and the communication line. For example, the moored type flying body or floating body may be one or plural wired power-supply drones that are moored by one or plural mooring lines (power lines). In addition, the flying body or the floating body such as the HAPS 100, satellite, drone, balloon, aircraft, UAV, etc. may fly by being provided with at least one of a battery and an engine as a power source. The UAV may be, for example, an unmanned aircraft that flies on fuel, or a drone that flies on battery, etc.

The HAPS 100, in which the relay communication station 11 is mounted, may be, for example, , controlled to be located by floating or flying in an airspace (floating airspace) where the altitude H from the ground G (or sea level) is equal to or less than 100 [km], by an autonomous control or an external control. The airspace in which the HAPS 100 is located may be, for example, the stratospheric airspace where the altitude H is equal to or greater than 18 [km] and equal to or less than 50 [km]. This airspace may be an airspace with relatively stable weather conditions at an altitude of 15 [km] or more and 25 [km] or less, and in particular an airspace at an altitude of approximately 20 [km]. Further, the airspace may be an airspace at an altitude of 0.1 [km] or more and 18 [km] or less for UAVs. The airspace may be an airspace at an altitude of 0.05 [km] or more for drones.

The relay communication station 11 is provided with an antenna section for feeder link (hereinafter also referred to as an "FL antenna") 111 and an antenna section for service link (HAPS-base station antenna) 112. The relay communication station 11 can perform a communication of feeder link FL with a gateway apparatus for HAPS (hereinafter referred to as "HAPS-GW") 12 that is disposed on land (or at sea), via the FL antenna 111. The FL antenna 111 is, for example, an array antenna capable of controlling a pointing direction as described below, and may be a Massive antenna in which a large number of antenna elements are disposed two-dimensionally and the directivity in the horizontal and vertical directions can be controlled.

The relay communication station 11 can perform communication of service link SL(1) with the HAPS-base station terminal 30(1) via the HAPS-base station antenna 112. The HAPS-base station antenna 112 is, for example, an array antenna, in which a pointing direction can be controlled, and may be a Massive antenna in which a large number of antenna elements are disposed two-dimensionally and the directivity in the horizontal and vertical directions can be controlled.

The HAPS-GW 12 is connected to the core network 40 of the mobile communication network via a wired or wireless communication line, and is provided with an antenna section for feeder link (hereinafter also referred to as an "FL antenna") 121 that is configured with a parabolic antenna, a Massive antenna capable of controlling the directivity in the horizontal and vertical directions, etc. The HAPS-GW 12 can perform a communication of feeder link FL with the relay communication station 11 mounted on the HASP, via the FL antenna 121.

The terrestrial base station 20 is provided with an antenna section (hereinafter also referred to as a "terrestrial-base station antenna") 21 and a base station apparatus 22 connected to the core network 40 of the mobile communication network via a wired communication line or a wireless communication line such as an optical fiber, etc. The base station apparatus 22 can perform a communication of service link SL(2) with a terminal (hereinafter also referred to as a "terrestrial-base station terminal") 30(2) via the terrestrial-base station antenna 21. The terrestrial-base station antenna 21 is, for example, an array antenna in which a pointing direction can be controlled, and may be a Massive antenna in which a large number of antenna elements are disposed two-dimensionally and the directivity in the horizontal and vertical directions can be controlled.

Each of the HAPS-GW 12 of the HAPS base station 10 and the base station apparatus 22 of the terrestrial base station 20 is connected to an inter-base station cooperative control apparatus (also called an "inter-base station network cooperative control apparatus" or "inter-system cooperative control apparatus") 50 via a wired communication line or a wireless communication line such as an optical fiber, etc. The HAPS base station 10 and the terrestrial base station 20 are time-synchronized with each other via the inter-base station cooperative control apparatus 50, and a timing control is performed so that the HAPS base station 10 and the terrestrial base station 20 have opposite transmission and reception timings.

Each of the HAPS base station 10 and the terrestrial base station 20 is configured, for example, using hardware such as a computer apparatus having a CPU, a memory, etc., an external-communication interface section for the core network 40 and the inter-base station cooperative control apparatus 50, a radio communication section, and the like, and is capable of performing a radio communication between the HAPS-base station terminal 30(1) and the terrestrial-base station terminal 30(2) and performing a communication with the core network 40 and the inter-base station cooperative control apparatus 50 by executing a predetermined program.

In the mobile communication system of the present embodiment, the same radio transmission method is used for communication of the service link SL(1) of the HAPS base station 10 and communication of the service link SL(2) of the terrestrial base station 20, and the same frequency is shared to improve a frequency efficiency of the service links. As for the radio transmission method, a TDD (Time Division Duplex) method is to be used, which uses the same frequency for both transmission and reception by time division, and, for example, a TDD method such as a communication method for the LTE (Long Term Evolution) or the LTE-Advanced, a communication method for the 4th generation mobile phones, and the communication method for the 5th generation mobile phones or subsequent next-generation mobile phone communication method.

The HAPS-base station terminal 30(1) that can connect to and communicate with the HAPS base station 10 and the terrestrial-base station terminal 30(2) that can connect to and communicate with the terrestrial base station 20 are mobile communication terminals 30 with the same specifications. The terminal 30 is a mobile phone, a smartphone, a portable personal computer with a function of mobile communication, or the like, and is also called a mobile terminal, a user equipment (UE), a mobile station, a mobile device, or a portable communication terminal. The terminal 30 may be a modular mobile station incorporated into a vehicle such as an automobile, or a mobile object such as a drone, or may be a terminal apparatus for an IoT (Internet of Things) device.

The terminal 30 is configured, for example, using hardware such as a computer apparatus having a CPU, a memory, etc., a radio communication section, and the like, and is capable of performing a radio communication with each of the HAPS base station 10 and the terrestrial base station 20, etc. by executing a predetermined program.

The HAPS base station 10 of the present embodiment is configured with the relay communication station 11 mounted on the HAPS 100 in the upper airspace, or is configured with the relay communication station 11 and the HAPS-GW 12 disposed on land (or at sea).

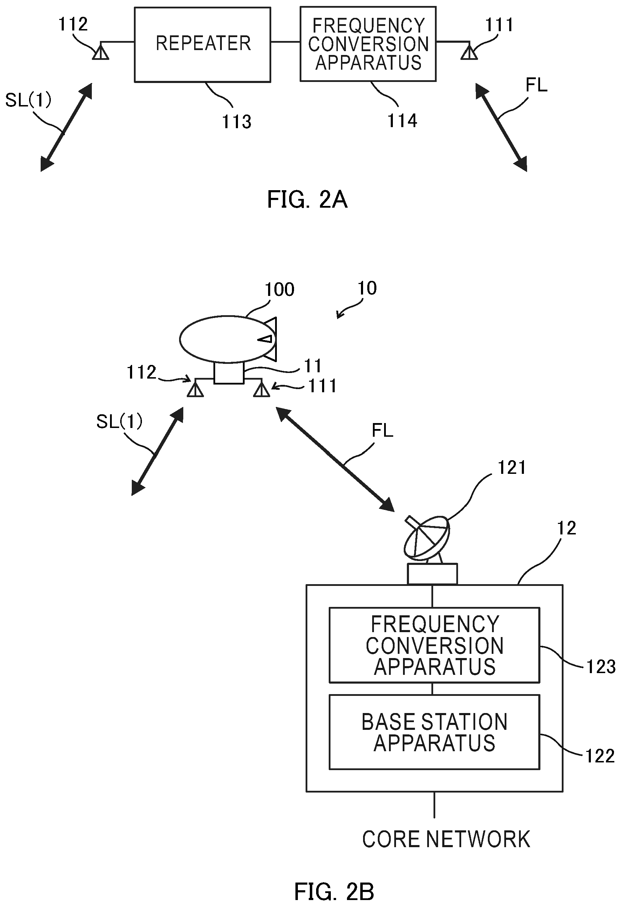

FIG. 2A is a diagram showing a configuration example of the relay communication station 11 configuring an example of the HAPS base station 10 in the mobile communication system of the embodiment. In the present configuration example, the relay communication station 11 is a radio relay apparatus (hereinafter referred to as a "frequency conversion repeater") for converting the frequency of a feeder link that is a frequency different from that of a service link. In the downlink, the relay communication station 11 converts the frequency of the feeder link transmitted from the HAPS-GW 12 into the frequency of the service link, and performs a transmission to the HAPS-base station terminal 30(1). On the other hand, in the uplink, the relay communication station 11 converts the frequency of the service link transmitted from the HAPS-base station terminal 30(1) into the frequency of the feeder link, and performs a transmission to the HAPS-GW 12.

The relay communication station 11 of the HAPS base station 10 in the present example is configured with a repeater relay apparatus (frequency conversion repeater) having a repeater 113 and a frequency conversion apparatus 114. The repeater 113 includes a low-noise amplifier that amplifies the reception signal of the service link SL(1) received via the HAPS-base station antenna 112, a power amplifier that amplifies the transmission signal of the service link SL(1) transmitted via the HAPS-base station antenna (SL antenna) 12, and the like. The frequency conversion apparatus 114 performs a conversion between the frequency of the service link SL(1) and the frequency of the feeder link FL.

FIG. 2B is a diagram showing a configuration example of the HAPS-GW 12, which corresponds to FIG. 2A. The HAPS-GW 12 in the present example includes a base station apparatus (hereinafter also referred to as "HAPS base station apparatus") 122 and a frequency conversion apparatus 123. The base station apparatus 122 includes a base-band processing apparatus that processes base band signals of the service link, a communication interface section for communicating with the core network 40 via a backhaul line, and the like. The frequency conversion apparatus 123 performs a frequency conversion between the frequency of the service link signal input to/output from the base station apparatus 122 and the frequency of the feeder link signal transmitted/received via the FL antenna 121. The HAPS-GW 12 includes a function of communicating with the inter-base station cooperative control apparatus 50 in order to adjust the transmission and reception timings of the service link SL with the terrestrial base station 20 and to transfer the location information of the HAPS 100.

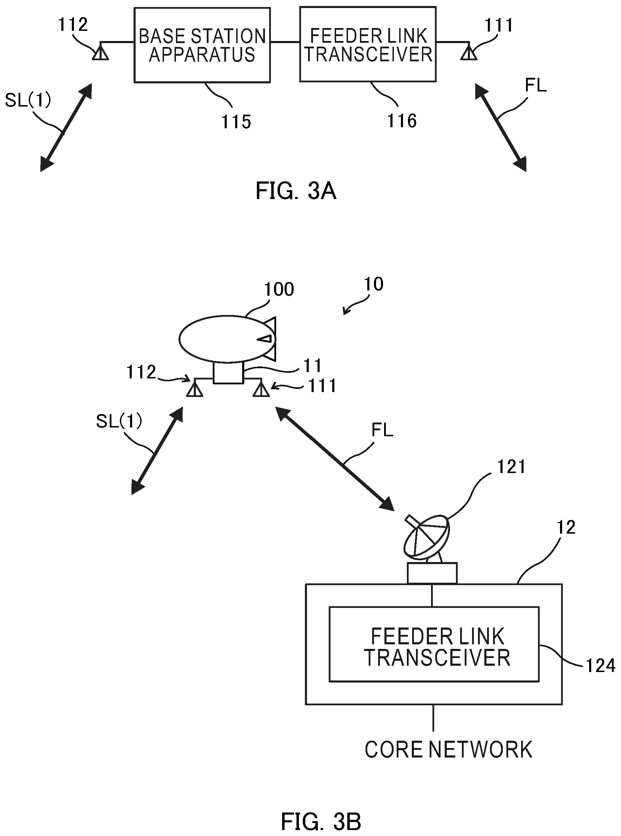

FIG. 3A is a diagram showing a configuration example of a relay communication station 11 configuring another example of the HAPS base station 10 in the mobile communication system of the embodiment. In the present configuration example, the relay communication station 11 of the HAPS base station 10 is configured with a base station apparatus similar to that of a normal terrestrial base station, and a feeder link transceiver in which the feeder link between the relay communication station 11 of the HAPS base station 10 and the HAPS-GW uses a frequency different from that of the service link. In the feeder link, unlike the service link, the optimum radio transmission method can be selected as appropriate.

The relay communication station 11 of the HAPS base station 10 in the present example includes a base station apparatus 115 equivalent to the base station apparatus (hereinafter also referred to as "terrestrial-base station apparatus") 22 of the terrestrial base station 20, and a feeder link transceiver 116. The base station apparatus 115 includes a low-noise amplifier that amplifies a reception signal of the service link SL(1) received via the HAPS-base station antenna 112, a power amplifier that amplifies a transmission signal of the service link SL(1) to be transmitted via the HAPS-base station antenna 112, a base-band processing apparatus that processes baseband signals of the service link, and the like. The feeder link transceiver 116 transmits and receives signals on the backhaul line transmitted and received via the FL antenna 111 to and from the HAPS-GW 12.

FIG. 3B is a diagram showing a configuration example of the HAPS-GW 12, which corresponds to FIG. 3A. The HAPS-GW 12 in the present example includes a feeder link transceiver 124. The feeder link transceiver 124 transmits and receives signals on the backhaul line, which are transmitted and received via the FL antenna 121 to and from the relay communication station 11 in the upper airspace mounted on the HAPS 100. Moreover, the feeder link transceiver 124 communicates with the core network 40 via the backhaul link. Furthermore, the HAPS-GW 12 includes a function of communicating with the inter-base station cooperative control apparatus 50 in order to adjust the transmission and reception timings of the service link SL with the terrestrial base station 20 and to transfer the location information of the HAPS 100.

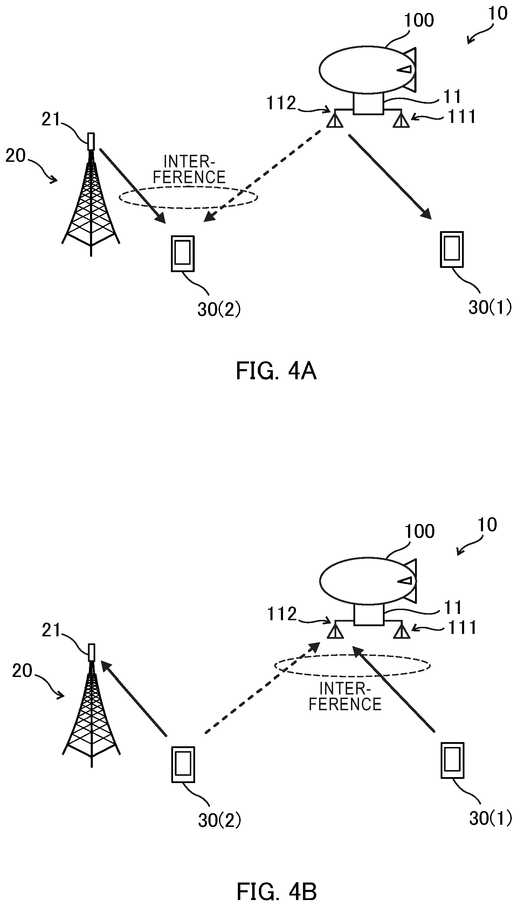

In a configuration providing the HAPS base station 10 and the terrestrial base station 20 as shown in FIG. 1, if the HAPS base station 10 and the terrestrial base station 20 transmit radio waves at the same time in the FDD method or the TDD method, or if the HAPS-base station terminal 30(1) and the terrestrial-base station terminal 30(2) transmit signals at the same time, an interference may occur between the HAPS cellular system in the upper airspace and the terrestrial cellular system. For example, as shown in FIG. 4A, when a signal of HAPS downlink is transmitted from the relay communication station 11 mounted on the HAPS 100 in the upper airspace to the HAPS-base station terminal 30(1), the transmission signal of the HAPS downlink may reach the terrestrial-base station terminal 30(2) that is receiving a signal of the terrestrial downlink from the terrestrial base station 20, and an interference from the HAPS downlink to the terrestrial-base station terminal 30(2) may occur. Furthermore, as shown in FIG. 4B, when a signal of the terrestrial uplink is transmitted from the terrestrial-base station terminal 30(2) to the terrestrial base station 20, the transmission signal of the terrestrial uplink may reach the relay communication station 11 of the HAPS 100 in the upper airspace that is receiving a signal of the HAPS uplink from the HAPS-base station terminal 30(1), and an interference from the terrestrial-base station terminal 30(2) to the HAPS uplink of the relay communication station 11 mounted on the HAPS 100 may occur.

There is conventionally known an enhanced Inter-Cell Interference Coordination called eICIC, which complies with the above-mentioned LTE-Advanced standard, as a technology for controlling an interference between a plurality of base stations.

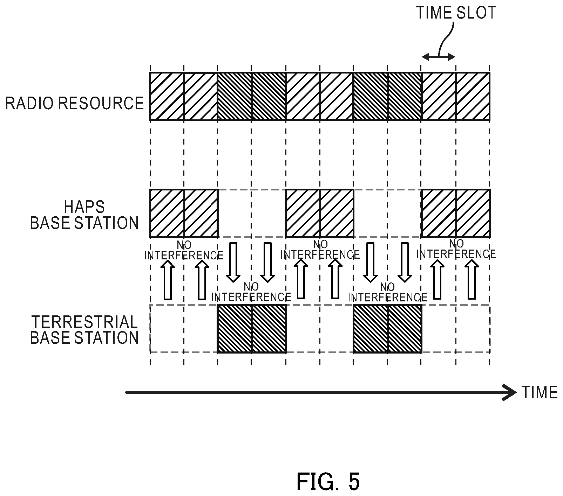

FIG. 5 is a diagram showing an arrangement example of time slots of radio resources that are respectively set in the HAPS base station 10 and the terrestrial base station 20, in the case of applying the enhanced Inter-Cell Interference Coordination (eICIC) when the HAPS base station is applied to the system configuration of the reference example. As shown in FIG. 5, in the conventional enhanced Inter-Cell Interference Coordination (eICIC), the radio resources of the same frequency are time-divided, and the time slots different from each other are allocated to the HAPS base station 10 and the terrestrial base station 20, respectively. In this way, since the radio resources are orthogonal on time axis, it is possible to mutually avoid interference at the same frequency between the HAPS base station 10 and the terrestrial base station 20. However, in the conventional enhanced Inter-Cell Interference Coordination (eICIC), each of the HAPS base station 10 and the terrestrial base station 20 uses the radio resources (time slots) in a time-divided manner. As a result, not all of the frequencies (all times) allocated to the mobile communication system of the embodiment are available for use, and the communication capacity (maximum transmission rate, peak throughput) of the service link decreases for each of the HAPS base station 10 and the terrestrial base station 20. In particular, the communication capacity of the terrestrial-base station terminals connected to the terrestrial base station 20, which has a large number of terminals within its cell, decreases.

In the present embodiment, in order to avoid an interference between the HAPS base station 10 and the terrestrial base station 20 and to prevent a decrease in the communication capacity (maximum transmission rate, peak throughput) of the service link of each of the HAPS base station 10 and the terrestrial base station 20, the TDD (Time Division Duplex) method, which is adopted in standards such as the fifth generation of mobile communications, is used as the transmission and reception method for the service link of each of the base stations 10, 20.

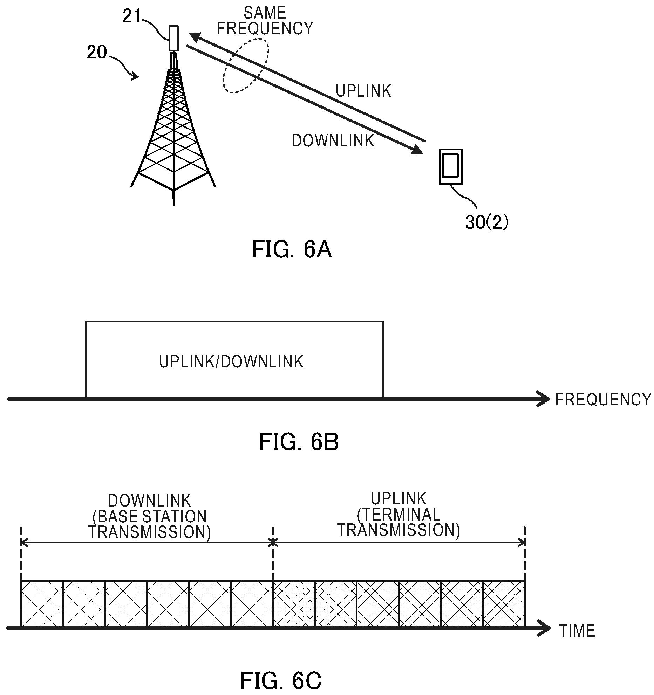

In the TDD (Time Division Duplex) method, the same frequency is used for the uplink and downlink, and the time slots are used in a time-division manner for the uplink and the downlink. For example, in the terrestrial base station 20, the same frequency is used for the uplink and the downlink between the terrestrial base station 20 and the terrestrial-base station terminal 30(2) as shown in FIGS. 6A and 6B. Then, as shown in FIG. 6C, the radio resources (time slots) on time axis are used in a time-division multiplexed manner between the downlink transmission (base station transmission) from the terrestrial base station 20 to the terrestrial-base station terminal 30(2) and the uplink transmission (terminal transmission) from the terrestrial-base station terminal 30(2) to the terrestrial base station 20.

In the case of using the TDD (Time Division Duplex) method in the HAPS base station 10 and the terrestrial base station 20 of the present embodiment, by applying the interference reduction technology described below, which avoids an interference between the HAPS base station 10 and the terrestrial base station 20, the HAPS base station 10 and the terrestrial base station 20 can completely share the same frequency. Furthermore, the HAPS base station 10 and the terrestrial base station 20 can use all frequencies (all times) allocated to the mobile communication system, so that a decrease in the communication capacity of the service link of each of the base stations 10, 20 can be prevented. In particular, it is possible to prevent a decrease in the communication capacity of the terrestrial-base station terminals connected to the terrestrial base station 20 having a large number of terminals in its cell.

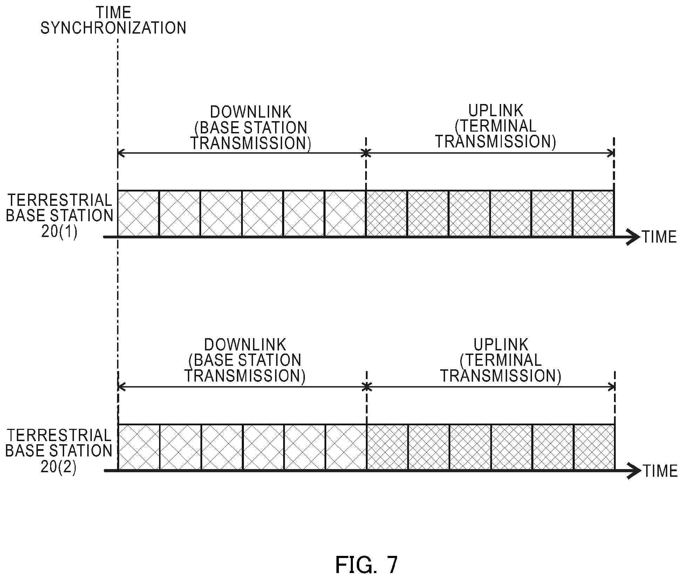

In the system using the conventional TDD method, in which the same frequency is shared by plural base stations, in order to avoid an interference between the uplink and the downlink of each of the base stations, for example, as shown in FIG. 7, a synchronization control is performed between plural base stations 20(1) and 20(2) so that the transmission timings of the base station transmissions on the downlink for transmission from the base station to the terminal are synchronized with each other, and so that the transmission timings of the terminal transmissions on the uplink for transmission from the terminal to the base station are synchronized with each other.

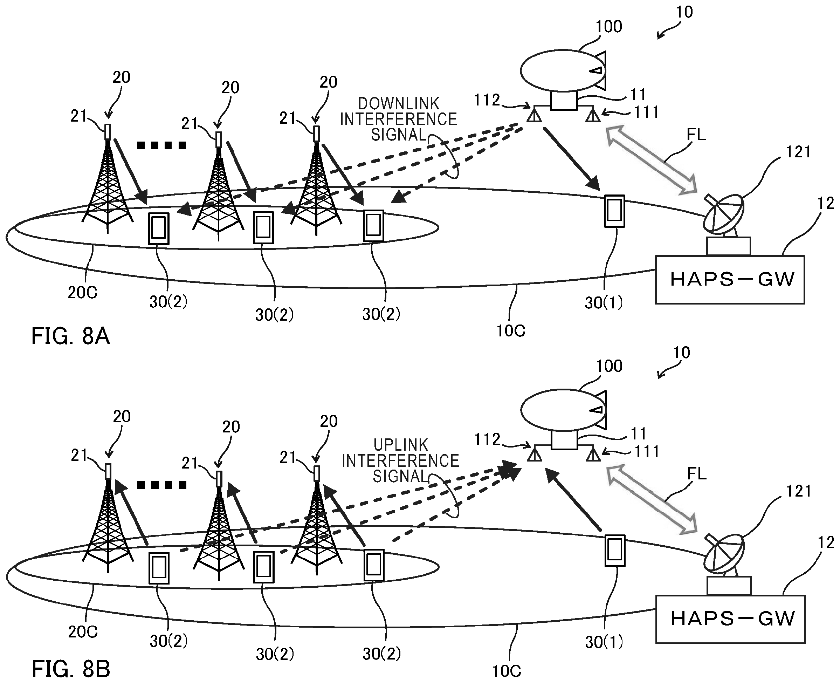

When the communication method of the terrestrial cellular system using the terrestrial base station 20 (hereinafter referred to as the "terrestrial cellular method") and the communication method of the HAPS cellular system using the HAPS base station 10 (hereinafter referred to as the "HAPS cellular method") are used simultaneously, as shown in FIG. 8A, particularly in the downlink of the service link, interference waves from the HAPS base station 10 that transmits signals over a wide area may degrade the communication quality of a large number of terrestrial-base station terminals 30(2) located in the terrestrial cell 20C, and as shown in FIG. 8B, in the uplink, signals transmitted by a large number of terrestrial-base station terminals 30(2) may degrade the communication quality of the HAPS-base station terminal 30(1) located in the HAPS cell 10C. Therefore, in order to simultaneously use the terrestrial cellular system and the HAPS cellular system, it is necessary to reduce the interference.

In the mobile communication system of the present embodiment, the transmission timing and the reception timing between the HAPS base station 10 and the terrestrial base station 20 are reversed to each other.

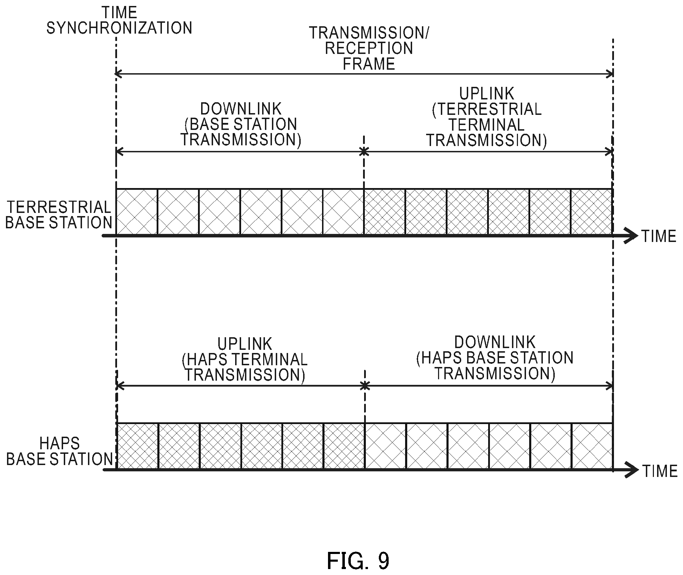

FIG. 9 is a diagram showing an arrangement example of time slots for uplink and downlink links when a synchronization control is executed to reverse the transmission timing and the reception timing between the terrestrial base station 20 and the HAPS base station 10 using the TDD method in the mobile communication system according to the embodiment. In each of the plural consecutive transmission/reception frames (radio frames) shown in FIG. 9, the transmission timing and the transmission period of the downlink from the terrestrial base station 20 to the terrestrial-base station terminal 30(2) are synchronized with the transmission timing and the transmission period of the uplink from the HAPS-base station terminal 30(1) to the HAPS base station 10. On the other hand, the transmission timing and the transmission period of the uplink from the terrestrial-base station terminal 30(2) to the terrestrial base station 20 are synchronized with the transmission timing and the transmission period of the downlink from the HAPS base station 10 to the HAPS-base station terminal 30(1).

Herein, the terrestrial base station 20 and the HAPS base station 10 may use time information obtained by a GNSS (Global Navigation Satellite System) receiver to adjust their transmission timings to be reversed to each other.

By reversing the transmission timing and the reception timing of the HAPS base station 10 and the terrestrial base station 20 to each other on the uplink and downlink as shown in FIG. 9, the situation receiving the interference is changed significantly compared to when the transmission timing and the reception timing of the HAPS base station 10 and the terrestrial base station 20 are the same on the uplink and the downlink as shown in FIG. 7.

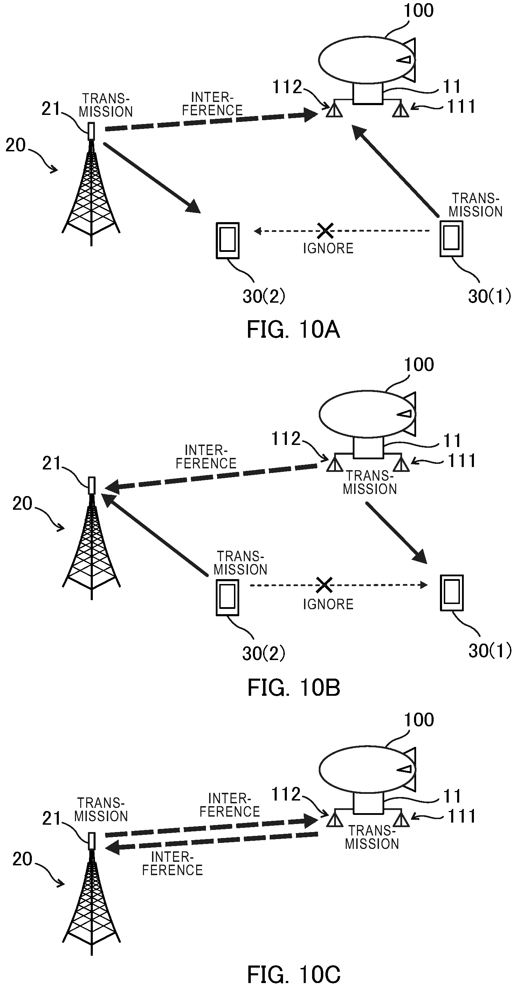

As shown in FIG. 10A, the downlink of the terrestrial base station 20 becomes the uplink of the service link of the HAPS base station 10. Therefore, the radio waves of downstream transmission transmitted from the terrestrial-base station antenna 21 reach the HAPS-base station antenna 112 as shown in the figure, and the downlink of the terrestrial base station 20 interferes with the uplink of the service link of the HAPS base station 10.

It is noted that, since the terrestrial-base station terminal 30(2) and the HAPS-base station terminal 30(1) are located at a relatively large distance and are both located on land, there are many obstructions, such as buildings, between the terminals. Therefore, the interference signal power received when the uplink-transmission signal of the HAPS-base station terminal 30(1) reaches the terrestrial-base station terminal 30(2) is generally negligibly small.

On the other hand, as shown in FIG. 10B, the uplink of the terrestrial base station 20 becomes the downlink of the service link of the HAPS base station 10. Therefore, the radio waves of downstream transmission of the service link transmitted from the HAPS-base station antenna 112 reach the terrestrial-base station antenna 21 as shown in the figure, causing an interference with the uplink of the terrestrial base station 20.

It is noted that, since the HAPS-base station terminal 30(1) and the terrestrial-base station terminal 30(2) are located at a relatively large distance, and are both located on land, there are many obstructions, such as buildings, between the terminals. Therefore, the interference signal power received when the transmission signal of the uplink of the terrestrial-base station terminal 30(2) reaches the HAPS-base station terminal 30(1) is generally negligibly small.

Summarizing FIGS. 10A and 10B, when the terrestrial cellular system and the HAPS cellular system share the same frequency as shown in FIG. 10C, the interference can be put together into an interference between the terrestrial-base station antenna 21 and the service link antenna (HAPS-base station antenna) 112 of the HAPS base station. That is, if the interference between the terrestrial-base station antenna 21 and the service link antenna 112 of the HAPS base station is reduced, the terrestrial cellular system and the HAPS cellular system can share the same frequency.

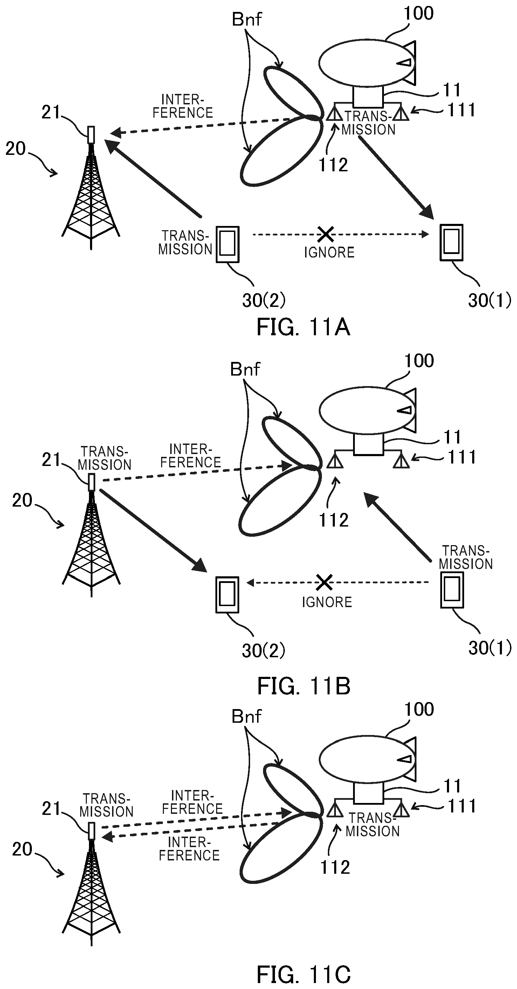

Therefore, in the present embodiment, the HAPS base station 10 estimates the direction to the service link antenna (terrestrial-base station antenna) 21 of the terrestrial base station 20, and applies a null-forming which directs a null of directional beam of the service link antenna of the HAPS base station (HAPS-base station antenna) 112 in that direction, thereby simultaneously achieving interference reductions as shown in FIGS. 11A and 11B. FIGS. 11A and 11B are combined to form FIG. 11C, which shows that the proposed null-forming can simultaneously reduce the interferences between the terrestrial-base station antenna 21 and the service link antenna 112 of the HAPS base station, allowing the terrestrial cellular system and the HAPS cellular system to share the same frequency. The null-forming is a null-forming in which the null of directivity of the HAPS-base station antenna 112 is directed in the direction to the terrestrial-base station antenna 21 and the transmission power and the reception power in that direction are significantly suppressed.

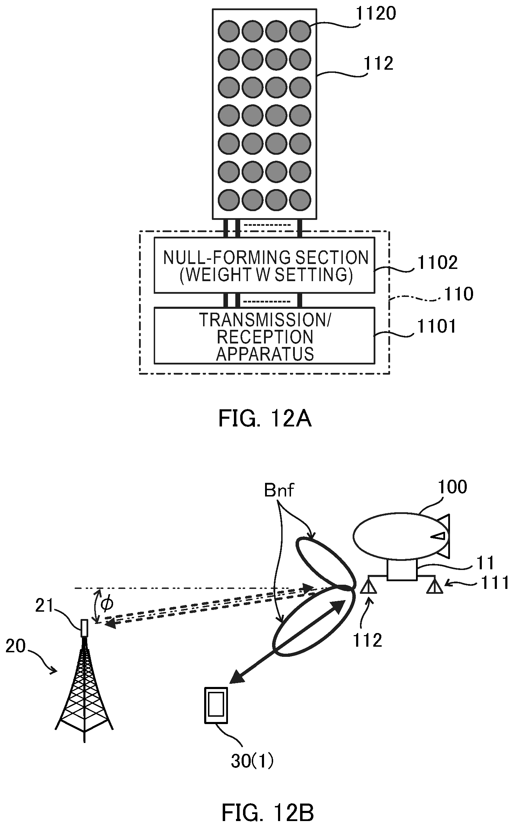

FIG. 12A is a diagram showing an example of the service link antenna (HAPS-base station antenna) 112 and the relay-communication station apparatus 110 in the HAPS base station 10 according to the embodiment. FIG. 12B is a diagram showing an example of beamforming in the HAPS base station 10. In the present embodiment, as shown in FIG. 12A, a Massive antenna, which is an array antenna in which a large number of antenna elements 1120 are disposed two-dimensionally, is used as the HAPS-base station antenna 112. The relay-communication station apparatus 110 is provided with a transmission/reception apparatus 1101 and a null-forming section 1102.

The null-forming section 1102 performs a transmission signal processing that generates an amplitude and phase (hereinafter referred to as a transmission null-forming weight) for performing a predetermined null-forming on each of the signals that are transmitted via the plural antenna elements 1120 of the HAPS-base station antenna 112, and generates a transmission signal by superimposing the transmission null-forming weight on the transmission signal of each antenna element 1120 to be output from the transmission/reception apparatus 1101, and performs a reception signal processing that generates an amplitude and phase (hereinafter referred to as a reception null-forming weight) for performing a predetermined null-forming on each of the reception signals that are received via the plural antenna elements 1120 of the HAPS-base station antenna 112, and generates a reception signal to the transmission/reception apparatus 1101 by superimposing the reception null-forming weight on each of the reception signals. It is noted that in the TDD method, the transmission null-forming weight and the reception null-forming weight may be the same as each other.

The transmission and reception null-forming weights are calculated based on the direction to the terrestrial base station (horizontal angle θ in the horizontal plane, elevation angle φ in the vertical plane) observed from the HAPS base station using, for example, location information of the HAPS-base station antenna 112 of the own station (location information of the HAPS 100) and location information of the terrestrial-base station antenna 21.

In the case that the number of antenna elements in the HAPS-base station antenna 112 is very large, for example, when the antenna is configured as a Massive antenna, by appropriately controlling the transmission and reception null-forming weights generated by the null-forming section 1102, it is possible to direct the directional beam Bnf of the HAPS-base station antenna 112 in the direction to the HAPS-base station terminal 30(1) while directing the directional null in the direction to the terrestrial-base station antenna 21.

As the beamforming control involving the null-forming, it is possible to use a method of creating the null-beamforming weight using location information obtained by a GNSS (Global Navigation Satellite System) receiver mounted on the HAPS, and a control of creating the null-beamforming weight by scanning the beam at regular angles (Δθ, Δφ) in the horizontal and vertical planes using the beamforming function of the HAPS-base station antenna, measuring the reception power of the downlink signal transmitted by the service link antenna of the terrestrial base station, and estimating the direction in which the reception power is maximum as the direction to the terrestrial base station.

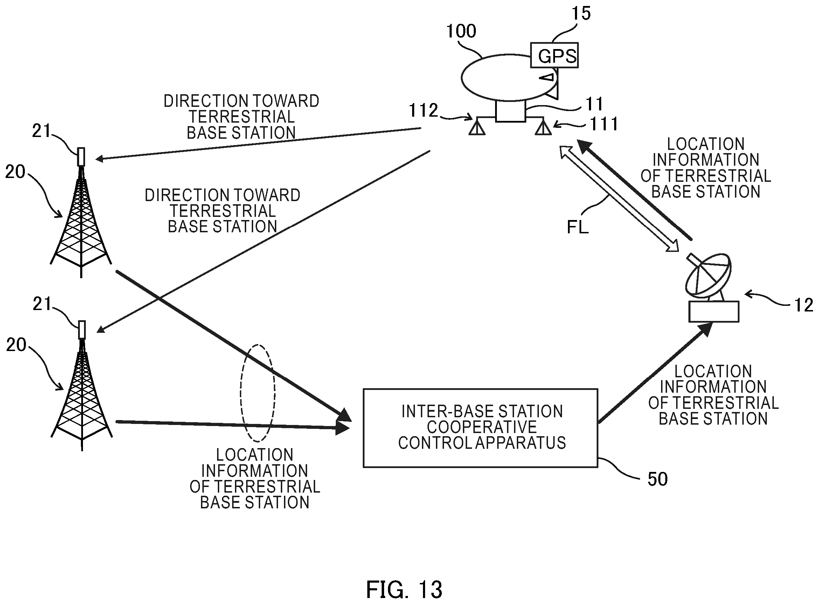

FIG. 13 is a diagram showing an example of beamforming control of the HAPS base station 10 using a GPS receiver 15 mounted on the HAPS via the inter-base station cooperative control apparatus 50 in the mobile communication system according to the embodiment. It is noted that, although the present example is an example in which the GNSS receiver is the GPS receiver 15 that receives signals from GPS satellites, the GNSS receiver that receives signals from a GNSS satellite other than the GPS may also be used.

In FIG. 13, the HAPS 100, which is mounted on the relay communication station 11 in the upper airspace, is provided with the GPS receiver 15. The location information of the HAPS 100 obtained by the GPS receiver is stored (updated at a predetermined timing) in the HAPS base station 10 (for example, the relay communication station 11) and used for the beamforming control of the HAPS base station 10. The location information of each terrestrial base station 20 is transmitted from each terrestrial base station 20 to the HAPS-GW 12 via the inter-base station cooperative control apparatus 50. The HAPS-GW 12 transfers the location information of each terrestrial base station 20 received from each terrestrial base station 20, to the HAPS base station 10 (for example, the relay communication station 11) via the feeder link FL. It is noted that, the terrestrial base station 20 or the terrestrial-base station antenna 21 may be provided with the GPS receiver 15, and the location information obtained by the GPS receiver may be transferred to the HAPS base station 10 (for example, the relay communication station 11) as location information of the terrestrial base station 20.

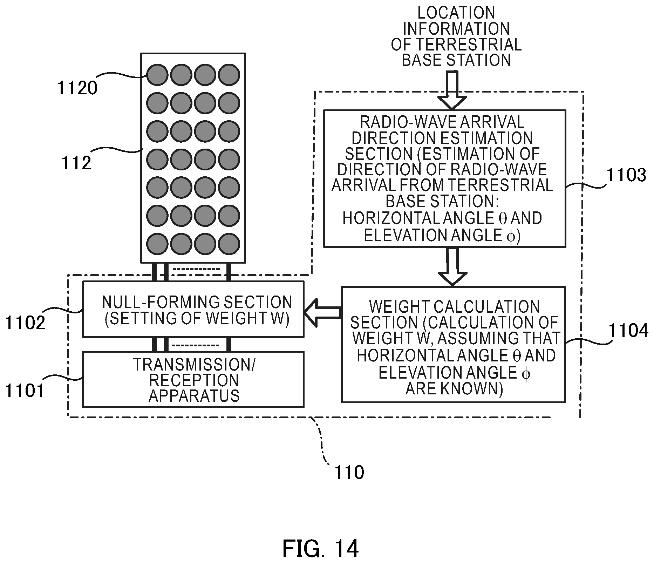

FIG. 14 is a diagram showing an example of a main part configuration of the antenna (HAPS-base station antenna) 112 and the relay-communication station apparatus 110 when the null-forming of antenna is performed by using the GPS receiver mounted on the HAPS, in the HAPS base station 10 according to the embodiment. It is noted that in FIG. 14, parts common to those in FIG. 12A described above are denoted by the same reference numerals, and their explanations are omitted.

In FIG. 14, the relay-communication station apparatus 110 is provided with a radio-wave arrival direction estimation section 1103 and a weight calculation section 1104. The radio-wave arrival direction estimation section 1103 calculates the horizontal angle θ and elevation angle φ of the direction to the terrestrial base station 20 (the direction to the service antenna of the terrestrial base station) relative to the location of the own station as a reference location, based on the location information of the own station and the location information of the terrestrial base station 20, which are transferred via the base-station cooperative control apparatus 50. The weight calculation section 1104 calculates the null-forming weight W using the null-forming technology such as, for example, the directionally constrained minimization of power method DCMP (Directionally Constrained Minimization of Power), with the radio-wave arrival direction estimated by the radio-wave arrival direction estimation section 1103 as known. The weight W calculated by the weight calculation section 1104 is set in the null-forming section 1102, and is superimposed on the transmission signal to be transmitted via each antenna element 1120 of the HAPS-base station antenna 112 and the reception signal received via each antenna element 1120 of the HAPS-base station antenna 112.

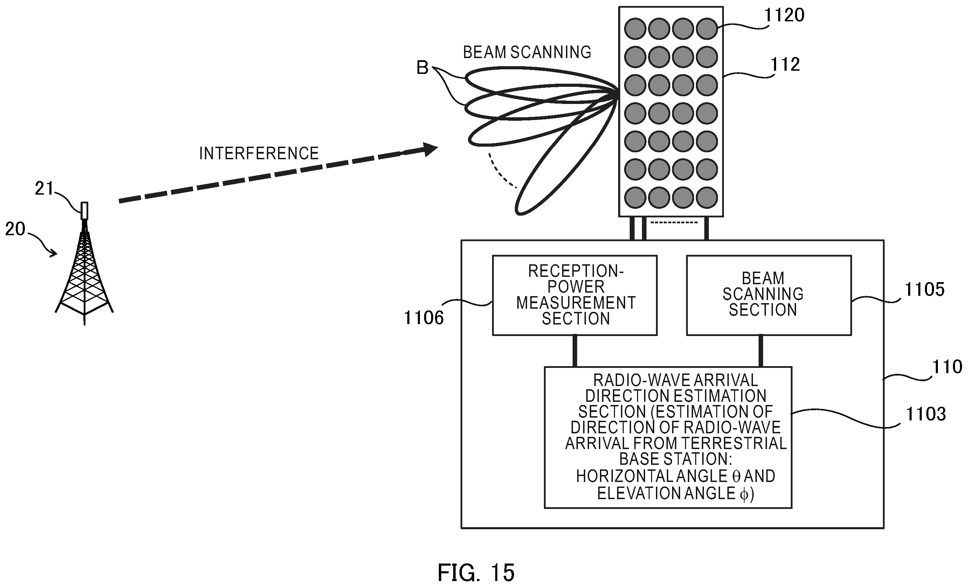

FIG. 15 is a diagram showing an example of a main part configuration of the antenna (HAPS-base station antenna) 112 and the relay-communication station apparatus 110 of the HAPS base station 10 in the case that the radio-wave arrival direction estimation for the terrestrial base station is performed by the beam scanning, in the HAPS base station 10 according to the embodiment. This example is an example in which the radio-wave arrival direction from the terrestrial base station 20 is estimated by a beam scanning in the elevation direction on the vertical plane. In a practical example, the scanning is performed at regular angular intervals (Δθ, Δφ) in the horizontal and vertical planes to search for the direction in which the reception power is maximum (θ, φ) = (nΔθ, mΔφ) (n, m are integers). In general, the direction, in which the reception power is maximum, is the direction to the service link antenna (terrestrial-base station antenna) 21 of the terrestrial base station 20. It is noted that in FIG. 15, parts common to those in FIGS. 12A and 14 described above are denoted by the same reference numerals, and their explanations are omitted.

In FIG. 15, the relay-communication station apparatus 110 is provided with a radio-wave arrival direction estimation section 1103, a beam scanning section 1105, and a reception-power measurement section 1106. While the beam scanning section 1105 scans the vertical plane in the upper airspace with the beam B at regular angular intervals, the reception-power measurement section 1106 measures the reception power received via the antenna 112. The radio-wave arrival direction estimation section 1103 determines the horizontal angle θ and elevation angle φ of the direction of the beam B at which the reception power is maximum, as the radio-wave arrival direction from the terrestrial base station 20 (horizontal angle θ and elevation angle φ).

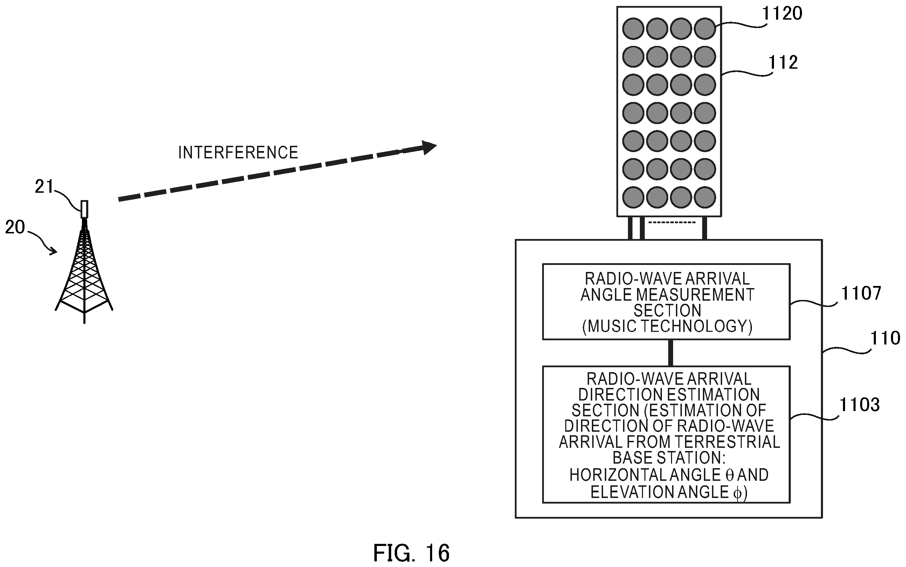

FIG. 16 is a diagram showing another example of a main part configuration of the antenna (HAPS-base station antenna) 112 of the HAPS base station 10 and the relay-communication station apparatus 110 in the case that the beamforming control is performed by the radio-wave arrival direction estimation for the terrestrial base station, in the HAPS base station 10 according to the embodiment. The example in FIG. 16 is an example of the radio-wave arrival direction estimation for the terrestrial base station by the radio-wave arrival angle estimation. It is noted that in FIG. 16, parts common to those in FIGS. 12A and 14 described above are denoted by the same reference numerals, and their explanations are omitted.

In FIG. 16, the relay-communication station apparatus 110 is provided with the radio-wave arrival direction estimation section 1103 and a radio-wave arrival angle measurement section 1107. When performing the downlink transmission by the terrestrial base station 20, the radio-wave arrival angle measurement section 1107 uses the array antenna (Massive antenna) 112 and estimates the radio-wave arrival angle direction (horizontal angle θ, elevation angle φ) of the downlink by signal processing. As a technology for estimating the radio-wave arrival angle direction, there is, for example, a radio-wave arrival angle measurement technology "MUSIC technology". The radio-wave arrival direction estimation section 1103 determines the radio-wave arrival angle direction (horizontal angle θ and elevation angle φ) estimated by the radio-wave arrival angle measurement section 1107, as the radio-wave arrival direction from the terrestrial base station (horizontal angle θ and elevation angle φ).

With the radio-wave arrival direction (horizontal angle θ and elevation angle φ) from the terrestrial base station estimated in each of FIGS. 15 and 16 as known, the above-described weight calculation section 1104 calculates the weight W using, for example, the directionally constrained minimization of power method DCMP (Directionally Constrained Minimization of Power) that is a null-forming technology.

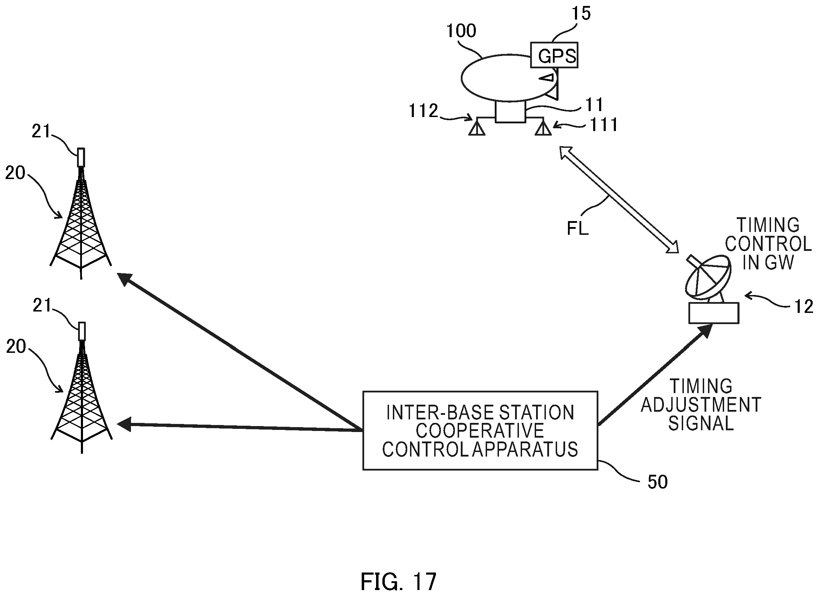

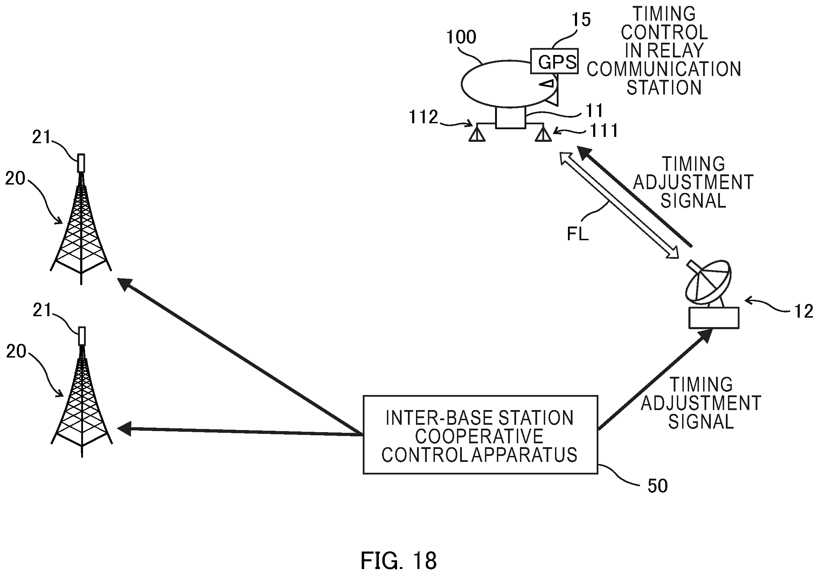

Each of FIGS. 17 and 18 is a diagram showing an example of control of the transmission timing and the reception timing between the terrestrial base station 20 and the HAPS base station 10 according to the embodiment. In the mobile communication system of the present embodiment, since the transmission timing and the reception timing of the terrestrial base station 20 and the HAPS base station 10 are needed to be reversed to each other, the inter-system (inter-base station) cooperative control apparatus 50 adjusts the transmission timing and the reception timing of the terrestrial base station 20 and the HAPS base station 10 so that the time periods of transmission and reception frames of the terrestrial base station 20 and the HAPS base station 10 are reversed to each other. In the example of FIG. 17, the transmission timing and the reception timing are adjusted by the HAPS-GW 12. In the example of FIG. 18, the transmission timing and the reception timing are adjusted by the relay communication station 11 mounted on the HAPS 100.

It is noted that in the above-described embodiments of FIGS. 11 to 18, the null-forming by the terrestrial base station 20 may be further applied. For example, as shown below, the terrestrial base station 20 may estimate the direction to the service link antenna (HAPS-base station antenna) 112 of the HAPS base station 10, and further apply the null-forming which directs the null of directional beam of the terrestrial-base station antenna 21 in that direction.

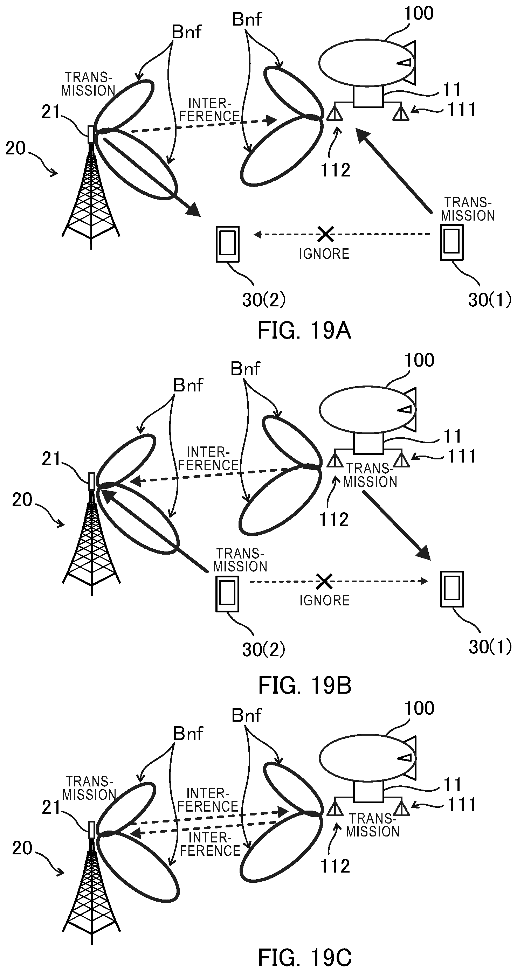

FIG. 19A is a diagram showing a reduction of interference from the terrestrial base station 20 to the uplink of the HAPS base station when the null-forming is applied to the beam forming in the antenna of each of the HAPS base station 10 and the terrestrial base station 20 according to the embodiment. FIG. 19B is a diagram showing a reduction of interference from the HAPS base station 10 to the uplink of the terrestrial base station 20 when the null-forming is applied to the beam forming in the antenna of each of the HAPS base station 10 and the terrestrial base station 20 according to the embodiment. The terrestrial base station 20 estimates the direction to the service link antenna (HAPS-base station antenna) 112 of the HAPS base station in the upper airspace, and applies the null-forming which directs the null of directional beam of the terrestrial-base station antenna 21 in that direction. Furthermore, the HAPS base station 10 estimates the direction to the antenna 21 of the terrestrial base station 20 and applies the null-forming which directs the null of directional beam of the service link antenna (HAPS-base station antenna) 112 of the HAPS base station in that direction. By applying these null-formings, the reductions of interferences are simultaneously achieved as shown in FIGS. 19A and 19B. Combining FIGS. 19A and 19B results in FIG. 19C, and the proposed null-formings can simultaneously further reduce the interferences between the terrestrial-base station antenna 21 and the service link antenna (HAPS-base station antenna) 112 of the HAPS base station, allowing the terrestrial cellular system and the HAPS cellular system to share the same frequency.

Herein, the null-forming in the terrestrial base station 20 is a null-forming which directs the directional null of the terrestrial-base station antenna 21 in the direction to the HAPS-base station antenna 112, and significantly suppresses the transmission power and the reception power in that direction. Furthermore, the null-forming in the HAPS base station 10 is a null-forming which directs the directional null of the HAPS-base station antenna 112 in the direction to the terrestrial-base station antenna 21, and significantly suppresses the transmission power and the reception power in that direction.

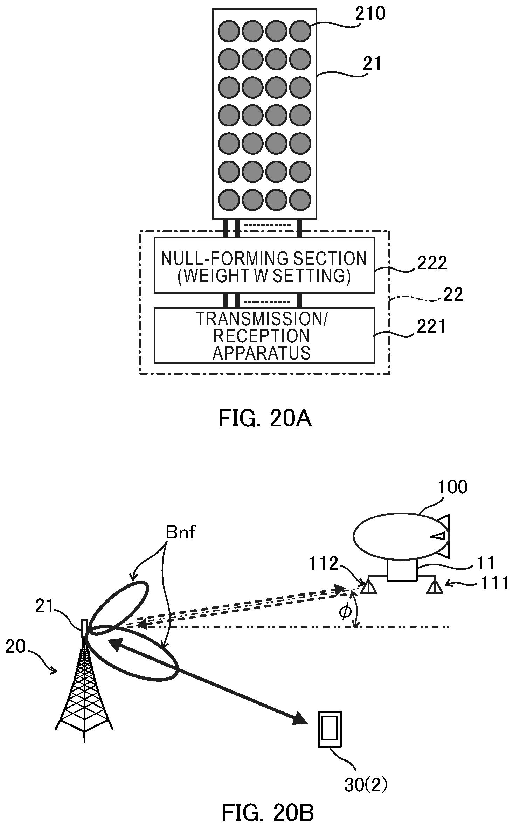

FIG. 20A is a diagram showing an example of the antenna (terrestrial-base station antenna) 21 and the base station apparatus 22 in the terrestrial base station 20 according to the embodiment. FIG. 20B is a diagram showing an example of beamforming in the terrestrial base station 20. In the example of FIG. 20A, a Massive antenna, which is an array antenna in which a large number of antenna elements 210 are disposed two-dimensionally, is used for the terrestrial-base station antenna 21. The base station apparatus 22 is provided with a transmission/reception apparatus 221 and a null-forming section 222.

The null-forming section 222 performs a transmission signal processing that generates amplitudes and phases (hereinafter referred to as transmission null-forming weights) for performing the predetermined null-forming on each of the signals to be transmitted via the plural antenna elements 210 of the terrestrial-base station antenna 21, and generates transmission signals by superimposing the transmission null-forming weights on the transmission signals of each antenna element 210 to be output from the transmission/reception apparatus 221, and a reception signal processing that generates amplitudes and phases (hereinafter referred to as reception null-forming weights) for performing the predetermined null-forming on each of the reception signals received via the plural antenna elements of the terrestrial-base station antenna 21, and generates reception signals for the transmission/reception apparatus 221 by superimposing the reception null-forming weights on each of the reception signals. It is noted that in the terrestrial base station 20 as well, the transmission null-forming weight and the reception null-forming weight may be the same as each other in the TDD system.

The transmission and reception null-forming weights are calculated based on the direction to the HAPS base station (horizontal angle θ in the horizontal plane, elevation angle φ in the vertical plane) observed from the terrestrial base station using, for example, location information of the terrestrial-base station antenna 21 of the own station and location information of the HAPS-base station antenna 112 (location information of the HAPS 100).

In the case that the number of antenna elements in the terrestrial-base station antenna 21 is very large, for example, when the antenna is configured as a Massive antenna, by appropriately controlling the transmission and reception null-forming weights generated by the null-forming section 222, it is possible to direct the directional beam Bnf of the terrestrial-base station antenna 21 in the direction to the terrestrial-base station terminal 30(2) while directing the directional null in the direction to the HAPS-base station antenna 112.

As the beamforming control involving the null-forming, it is possible to use a method of creating the null-beamforming weight using location information obtained by the GNSS receiver mounted on the HAPS, and a control of creating the null-beamforming weight by scanning the beam at regular angles (Δθ, Δφ) in the horizontal and vertical planes using the beamforming function of the terrestrial-base station antenna, measuring the reception power of the downlink signal transmitted by the service link antenna of the HAPS base station, and estimating the direction in which the reception power is maximum as the direction to the HAPS.

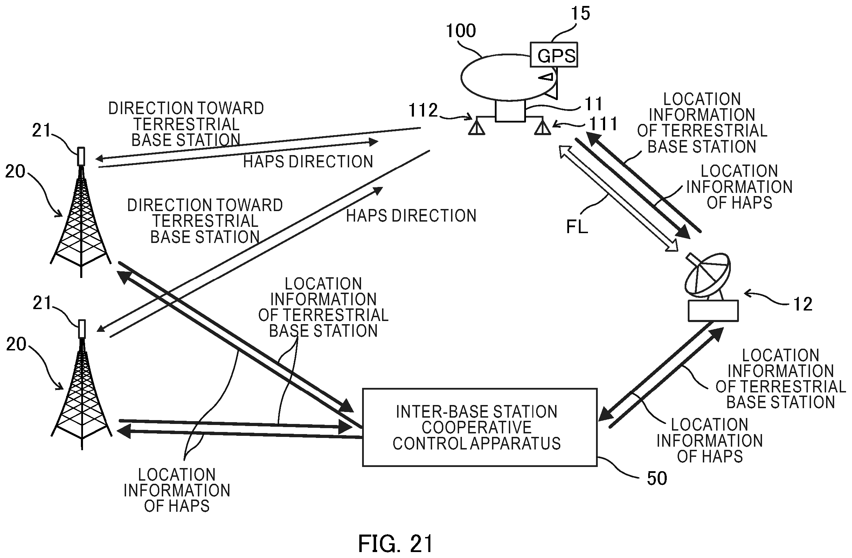

FIG. 21 is a diagram showing an example of beamforming control of the terrestrial base station 20 using the GPS receiver 15 mounted on the HAPS via the inter-base station cooperative control apparatus 50 in the mobile communication system according to the embodiment. It is noted that, although the present example is an example in which the GNSS receiver is the GPS receiver 15 that receives signals from GPS artificial satellites, a GNSS receiver that receives signals from artificial satellites of GNSS other than GPS may also be used.

In FIG. 21, the HAPS 100 mounted on the relay communication station 11 in the upper airspace is provided with the GPS receiver 15. The location information of the HAPS 100 obtained by the GPS receiver is transmitted from the relay communication station 11 to the HAPS-GW 12 via the feeder link FL. The HAPS-GW 12 transfers the location information of the HAPS 100 received from the relay communication station 11 to each terrestrial base station 20 via the inter-base station cooperative control apparatus 50. In each terrestrial base station 20, the location information of the HAPS 100 received via the inter-base station cooperative control apparatus 50 is used for the beamforming control.

It is noted that in FIG. 21, similarly to the above-described FIG. 13, the location information of the HAPS 100 obtained by the GPS receiver is stored (updated at a predetermined timing) in the HAPS base station 10 (for example, the relay communication station 11), and is also used for the beamforming control of the HAPS base station 10. Furthermore, the location information of each terrestrial base station 20 is transmitted from each terrestrial base station 20 to the HAPS-GW 12 via the inter-base station cooperative control apparatus 50. The HAPS-GW 12 transfers the location information of each terrestrial base station 20 received from each terrestrial base station 20, to the HAPS base station 10 (for example, the relay communication station 11) via the feeder link FL.

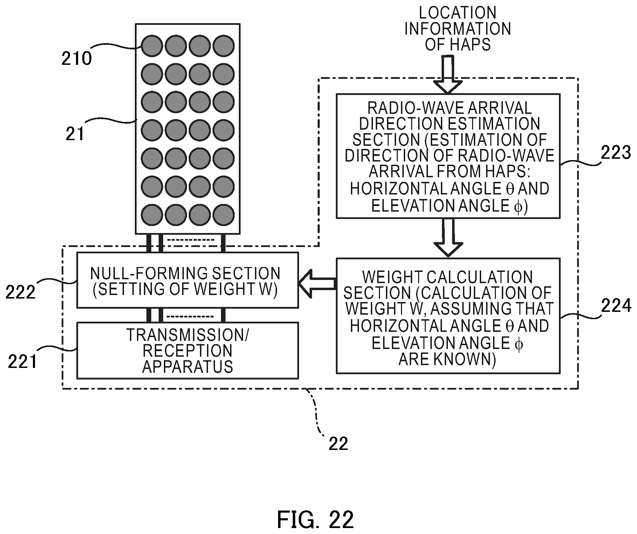

FIG. 22 is a diagram showing an example of a main part configuration of the antenna (terrestrial-base station antenna) 21 and the base station apparatus 22 when the null-forming of the antenna is performed using the GPS receiver mounted on the HAPS, in the terrestrial base station 20 according to the embodiment. It is noted that in FIG. 22, parts common to those in FIG. 20A described above are denoted by the same reference numerals and their explanations are omitted.

In FIG. 22, the base station apparatus 22 is provided with a radio-wave arrival direction estimation section 223 and a weight calculation section 224. The radio-wave arrival direction estimation section 223 calculates the horizontal angle θ and the elevation angle φ of the direction to the HAPS 100 (the direction to the service antenna of the HAPS base station) relative to the location of the own station as reference location, based on the location information of the own station and the location information of the HAPS 100 which are transferred via the inter-base station cooperative control apparatus 50. The weight calculation section 224 calculates the null-forming weight W using the null-forming technology such as, for example, the directionally constrained minimization of power method DCMP (Directionally Constrained Minimization of Power), with the radio-wave arrival direction estimated by the radio-wave arrival direction estimation section 223 as known. The weight W calculated by the weight calculation section 224 is set in the null-forming section 222 and superimposed on the transmission signal to be transmitted via each antenna element 210 of the terrestrial-base station antenna 21 and the reception signal received via each antenna element 210 of the terrestrial-base station antenna 21.

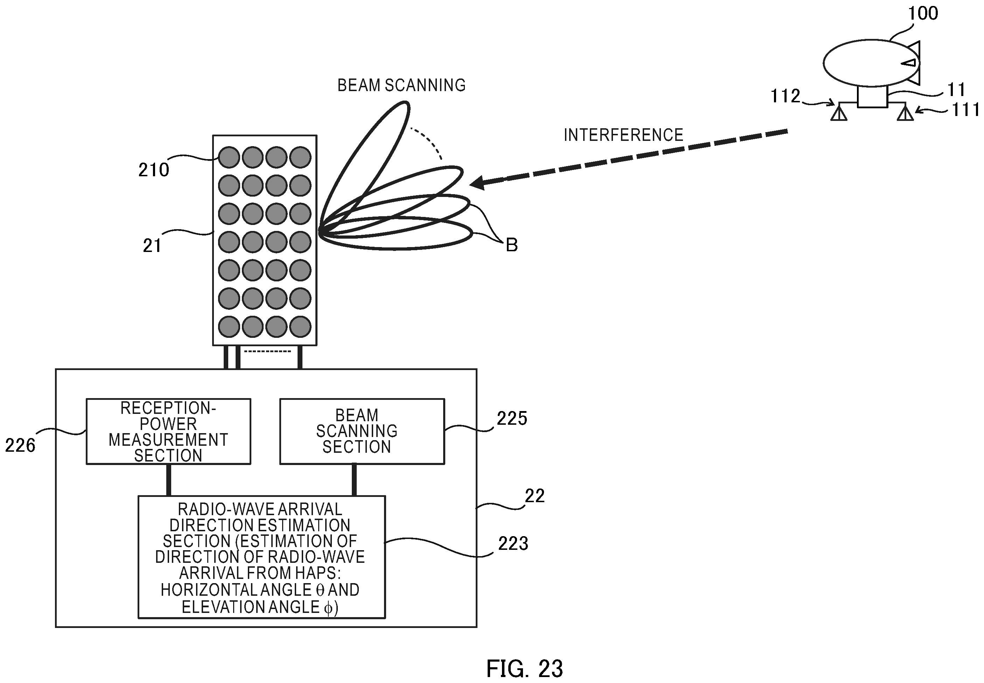

FIG. 23 is a diagram showing an example of a main part configuration of the antenna (terrestrial-base station antenna) 21 and the base station apparatus 22 of the terrestrial base station 20 when the radio-wave arrival direction estimation for the HAPS is performed by the beam scanning, in the terrestrial base station 20 according to the embodiment. This example is an example of the radio-wave arrival direction estimation for the HAPS by the beam scanning in the elevation direction on the vertical plane. In a practical example, the scanning is performed at regular angular intervals (Δθ, Δφ) in the water surface plane and the vertical plane to search for the direction (θ, φ) = (nΔθ, mΔφ) (n and m are integers) with the maximum reception power. In general, the direction, in which the reception power is maximum, is the direction to the service antenna of the HAPS base station. It is noted that in FIG. 23, parts common to those in FIGS. 20A and 22 described above are denoted by the same reference numerals, and their explanations are omitted.

In FIG. 23, the base station apparatus 22 is provided with the radio-wave arrival direction estimation section 223, a beam scanning section 225 and a reception-power measurement section 226. While the beam scanning section 225 scans the vertical plane in the upper airspace with the beam B at regular angular intervals, the reception-power measurement section 226 measures the reception power received via the antenna 21. The radio-wave arrival direction estimation section 223 determines the horizontal angle θ and elevation angle φ of the direction of the beam B at which the reception power is maximum, as the radio-wave arrival direction from the HAPS (horizontal angle θ and elevation angle φ).

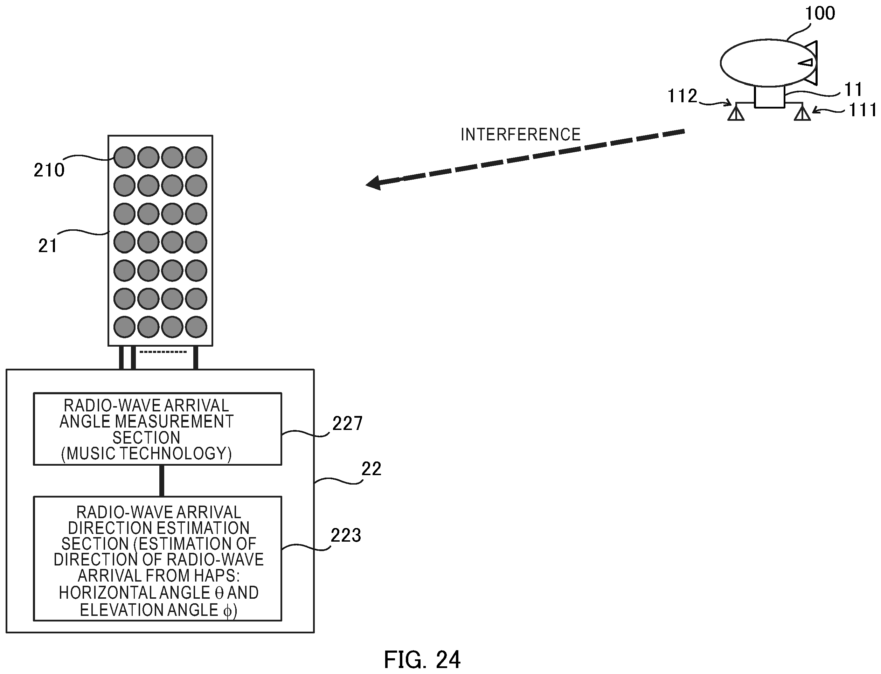

FIG. 24 is a diagram showing another example of the main part configuration of the antenna (terrestrial-base station antenna) 21 and the base station apparatus 22 of the terrestrial base station 20 in the case that the beamforming control is performed by the radio-wave arrival direction estimation for the HAPS, in the terrestrial base station 20 according to the embodiment. The example in FIG. 24 is an example of the radio-wave arrival direction estimation for the HAPS by the radio-wave arrival angle estimation. It is noted that in FIG. 24, parts common to those in FIGS. 20A and 22 described above are denoted by the same reference numerals, and their explanations are omitted.

In FIG. 24, the base station apparatus 22 is provided with the radio-wave arrival direction estimation section 223 and a radio-wave arrival angle measurement section 227. When performing the downlink transmission by the HAPS base station 10, the radio-wave arrival angle measurement section 227 uses the array antenna (Massive antenna) 21 and estimates the radio-wave arrival angle direction (horizontal angle θ, elevation angle φ) of the downlink by signal processing. As a technology for estimating the radio-wave arrival angle direction, there is, for example, the radio-wave arrival angle measurement technology "MUSIC technology". The radio-wave arrival direction estimation section 223 determines the radio-wave arrival angle direction (horizontal angle θ and elevation angle φ) estimated by the radio-wave arrival angle measurement section 227, as the radio-wave arrival direction from the HAPS (horizontal angle θ and elevation angle φ).

With the radio-wave arrival direction from HAPS (horizontal angle θ and elevation angle φ) estimated in each of FIGS. 23 and 24 as known, the above-described weight calculation section 224 calculates the weight W using, for example, the directionally constrained minimization of power method DCMP that is a null-forming technology.

As described above, according to the present embodiment which uses the TDD method as the transmission and reception method, it is possible to share the same frequency for each service link between the terminal and each of the service link antenna (HAPS-base station antenna) of the HAPS base station (first base station) and the service link antenna (terrestrial-base station antenna) of the terrestrial base station (second base station), and overcome the problem of the reduction in the communication capacity of the terminal although the same frequency can be shared as in the enhanced Inter-Cell Interference Coordination (eICIC) shown in FIG. 5.

Furthermore, in the present embodiment, in each service link between the terminal and each of the service link antenna (HAPS-base station antenna) of the HAPS base station 10 and the service link antenna (terrestrial-base station antenna) of the terrestrial base station 20, the same frequency is shared and the TDD method is used as the transmission and reception method, and the transmission timing and the reception timing of the radio communication of TDD method in the service link are reversed to each other between the HAPS base station 10 and the terrestrial base station 20. As a result, the downlink of the service link of the terrestrial base station 20 has the same timing as the uplink of the service link of the HAPS base station 10, and there is absolutely no interference from the terminal (terrestrial-base station terminal) 30(2) communicating with the terrestrial base station 20 to the uplink of the service link of the HAPS base station 10, and only interference occurs in the downlink of the service link transmitted from the terrestrial base station 20. On the other hand, the downlink of the service link of the HAPS base station 10 has the same timing as the uplink of the service link of the terrestrial base station 20, and the downlink of the service link of the HAPS base station 10 does not interfere with the downlink of the terrestrial base station terminal 30(2) at all, but does interfere with the uplink of the service link of the terrestrial base station 20.

From the above, with respect to interference on the uplink and downlink of the service link between the HAPS base station 10 and the terrestrial base station 20, there is no interference giving any interference to the terrestrial-base station terminal 30(2) and the HAPS-base station terminal 30(1) which respectively communicate with the base stations 10 and 20, there is an interference only between the HAPS base station 10 and the terrestrial base station 20.

Accordingly, in order to suppress the interference between the cell (HAPS cell) 10C configured by the HAPS base station 10 and the cell (terrestrial cell) 20C configured by the terrestrial base station 20, it is sufficient to simply suppress the interference between the HAPS base station 10 and the terrestrial base station 20.

Therefore, in the present embodiments, by directing the null of the directional beam of the HAPS-base station antenna in the direction to the terrestrial-base station antenna, it is possible to reduce the interference that is caused by the transmission signal on the downlink from the HAPS-base station antenna and given to the reception signal on the uplink of the terrestrial-base station antenna, and it is also possible to reduce the interference that is caused by the transmission signal on the downlink from the terrestrial-base station antenna and given to the reception signal on the uplink of the HAPS-base station antenna.

Moreover, in the present embodiment, the interference can be further reduced by directing the null of the directional beam of the terrestrial-base station antenna in the direction to the HAPS-base station antenna.

Further, according to the present embodiment, the frequency utilization rate can be doubled by sharing the frequency of the terrestrial base station with the HAPS service link.

Furthermore, according to the present embodiment, this can be achieved by using a normal TDD method (5G, etc.) and changing the transmission timing and the reception timing of the terrestrial base station 20 and the HAPS base station 10 (without any special changes).

Moreover, according to the present embodiment, in the terrestrial base station 20, this can be realized by the beam control that directs the null in the direction to the HAPS located above the terrestrial base station by using the base-station array antenna that is commonly used in the 5G. No additional special apparatus is required. In particular, since the direction to the HAPS can be easily estimated using the information of the GPS or the like mounted on the HAPS, the null control to direct the null in that direction is easy.

In addition, according to the present embodiment, in the HAPS base station 10, this can be achieved by the beam control that directs the null in the direction to the terrestrial base station located below the HAPS by using the base-station array antenna that is commonly used in the 5G. No additional special apparatus is required. In particular, since the direction to the HAPS can be easily estimated using the information of the GPS or the like mounted on the HAPS, the null control to direct the null in that direction is easy.

Further, according to the present embodiment, the HAPS base station 10 does not require any special apparatus or control to share the frequency.

Furthermore, according to the present embodiment, the transmission timing adjustment between the terrestrial base station 20 and the HAPS base station 10 can be easily achieved by the inter-system (base station) cooperative control apparatus 50.

Since the present invention can improve the frequency utilization efficiency at the HAPS base station and terrestrial base station, prevent the decrease in the communication capacity of terminals, and provide the system capable of realizing the frequency sharing between the HAPS base stations and the terrestrial base stations without adding any special apparatus to the HAPS base station and the terrestrial base station, it is possible to contribute to achieving Goal 9 of the Sustainable Development Goals (SDGs), which is to "Create a foundation for industry and technological innovation".

The present invention can also be applied to the cases where the frequency is shared between various kinds of systems exemplified below in (A) to (D) and the terrestrial base station.
(A) Frequency sharing between HAPS base stations and terrestrial base stations.
(B) Frequency sharing between helicopter-mounted radio relay systems or UAV-mounted radio relay systems and terrestrial base stations during disasters.
(C) Frequency sharing between drone-mounted radio relay systems and terrestrial base stations.
(D) Frequency sharing between geostationary, medium or low earth orbit satellite communication systems and terrestrial base stations.

It is noted that, the process steps and configuration elements of the mobile communication system, the upper-airspace-relaying type base station, the HAPS cellular system, the terrestrial base station, the terrestrial cellular system, the relay communication station, the HAPS-GW, the terminal (user apparatus, mobile station, communication terminal), and the inter-base station cooperative control apparatus described in the present description can be implemented with various means. For example, these process steps and configuration elements may be implemented with hardware, firmware, software, or a combination thereof.

With respect to hardware implementation, means such as processing units or the like used for establishing the foregoing steps and configuration elements in entities (for example, various kinds of radio communication apparatuses, radio relay apparatuses, Node B, servers, gate ways, exchanges, computers, hard disk drive apparatuses, or optical disk drive apparatuses) may be implemented in one or more of an application-specific IC (ASIC), a digital signal processor (DSP), a digital signal processing apparatus (DSPD), a programmable logic device (PLD), a field programmable gate array (FPGA), a processor, a controller, a microcontroller, a microprocessor, an electronic device, other electronic unit, computer, or a combination thereof, which are designed so as to perform a function described in the present specification.

With respect to the firmware and/or software implementation, means such as processing units or the like for using to establish the foregoing configuration elements may be implemented with a program (for example, code such as procedure, function, module, instruction, etc.) for performing a function described in the present specification. In general, any computer/processor readable medium of materializing the code of firmware and/or software may be used for implementation of means such as processing units and so on for establishing the foregoing steps and configuration elements described in the present specification. For example, in a control apparatus, the firmware and/or software code may be stored in a memory and executed by a computer or processor. The memory may be implemented within the computer or processor, or outside the processor. Further, the firmware and/or software code may be stored in, for example, a medium capable being read by a computer or processor, such as a random-access memory (RAM), a read-only memory (ROM), a non-volatility random-access memory (NVRAM), a programmable read-only memory (PROM), an electrically erasable PROM (EEPROM), a FLASH memory, a floppy (registered trademark) disk, a compact disk (CD), a digital versatile disk (DVD), a magnetic or optical data storage unit, or the like. The code may be executed by one or more of computers and processors, and a certain aspect of functionalities described in the present specification may be executed by a computer or processor.

The description of embodiments disclosed in the present specification is provided so that the present disclosures can be produced or used by those skilled in the art. Various modifications of the present disclosures are readily apparent to those skilled in the art and general principles defined in the present specification can be applied to other variations without departing from the spirit and scope of the present disclosures. Therefore, the present disclosures should not be limited to examples and designs described in the present specification and should be recognized to be in the broadest scope corresponding to principles and novel features disclosed in the present specification.

### REFERENCE SIGNS LIST

10: HAPS base station (upper-airspace-relaying type base station)
10C: HAPS cell
11: relay communication station
12: HAPS-GW
15: GPS receiver
20: terrestrial base station
20C: terrestrial cell
21: terrestrial-base station antenna (service link antenna)
22: base station apparatus
23: GPS receiver
30: terminal
30(1): HAPS-base station terminal
30(2): terrestrial-base station terminal
40: core network
50: inter-base station cooperative control apparatus
100: HAPS
110: relay-communication station apparatus
1101: transmission/reception apparatus
1102: null-forming section
1103: radio-wave arrival direction estimation section
1104: weight calculation section
1105: beam scanning section
1106: reception-power measurement section
1107: radio-wave arrival angle measurement section
111: FL antenna
112: HAPS-base station antenna (service link antenna)
1120: antenna element
113: repeater
114: frequency conversion apparatus
115: base station apparatus
116: feeder link transceiver
121: FL antenna
122: base station apparatus
123: frequency conversion apparatus
124: feeder link transceiver
210: antenna element
221: transmission/reception apparatus
222: null-forming section
223: radio-wave arrival direction estimation section
224: weight calculation section
225: beam scanning section
226: reception-power measurement section
227: radio-wave arrival angle measurement section

## Claims

1. A mobile communication system comprising a upper-airspace-relaying type base station that performs a radio communication with a terminal via a service link antenna of a relay communication station provided in a flying body or floating body located in an upper airspace, and one or plural terrestrial base stations that performs a radio communication with a terminal via a service link antenna disposed on land or at sea, wherein the upper-airspace-relaying type base station and the terrestrial base station are time-synchronized with each other,
wherein each of the upper-airspace-relaying type base station and the terrestrial base station performs a radio communication of a service link with a terminal by a TDD (Time Division Duplex) method using a same frequency,
wherein a transmission timing and a reception timing of the radio communication of the TDD method in the service link are reversed to each other between the upper-airspace-relaying type base station and the terrestrial base station, and
wherein the upper-airspace-relaying type base station estimates a direction to the service link antenna of the terrestrial base station, and controls to direct a null of directional beam of the service link antenna of the upper-airspace-relaying type base station in the estimated direction to the service link antenna of the terrestrial base station.

2. The mobile communication system according to claim 1,
wherein the relay communication station mounted on the flying body or the floating body is configured with a repeater relay apparatus that relays transmission and reception signals without regenerating them.

3. The mobile communication system according to claim 1,
wherein the relay communication station mounted on the flying body or the floating body is configured with a base station apparatus that regenerates transmission and reception signals, remodulates the regenerated signals, and relays the remodulated signals.

4. The mobile communication system according to claim 1,
wherein the terrestrial base station estimates a direction to the service link antenna of the upper-airspace-relaying type base station, and controls to direct a null of a directional beam of the service link antenna of the terrestrial base station in the estimated direction to the service link antenna of the upper-airspace-relaying type base station.

5. The mobile communication system according to any one of claims 1 to 4, further comprising an inter-base station control apparatus that performs a control between the upper-airspace-relaying type base station and the terrestrial base station, and
wherein the inter-base station control apparatus adjusts each of the transmission timings so that the transmission and the reception are reversed to each other between respective base stations, by using time information of GNSS (Global Navigation Satellite System) that is received by the upper-airspace-relaying type base station and received via a gateway apparatus, and time information of GNSS (Global Navigation Satellite System) received by the terrestrial base station.

6. The mobile communication system according to any one of claims 1 to 4, further comprising an inter-base station control apparatus that performs a control between the upper-airspace-relaying type base station and the terrestrial base station, and
wherein location information obtained by a GNSS (Global Navigation Satellite System) receiver mounted on the terrestrial base station or the service link antenna of the terrestrial base station is transferred to the upper-airspace-relaying type base station via a gateway apparatus and the inter-base station control apparatus, and the upper-airspace-relaying type base station estimates the direction to the service link antenna of the terrestrial base station relative to the location information of the relay communication station.

7. The mobile communication system according to any one of claims 1 to 4,
wherein the upper-airspace-relaying type base station comprises an array antenna as the service link antenna, measures a reception power of radio waves from the service link antenna of the terrestrial base station using the array antenna, and estimates the direction to the service link antenna of the terrestrial base station from a measurement result of the reception power.

8. The mobile communication system according to any one of claims 1 to 4,
wherein the flying body or the floating body is a communication satellite, a UAV (Unmanned Aerial Vehicle) that flies at an altitude of 18 km or less, or a HAPS that flies in the stratosphere at an altitude of 18 km or more.
